# EUROPÄISCHE PATENTSCHRIFT

(11) **EP 1 784 273 B1**
(45) Veröffentlichungstag und Bekanntmachung des Hinweises auf die Patenterteilung: **02.06.2010**
(21) Anmeldenummer: 05784547.1
(22) Anmeldetag: 01.09.2005
(51) Int. Cl.: B23K 9/00, B21B 3/00

(54) **VERFAHREN ZUR HERSTELLUNG VON METALLBÄNDERN**
METHOD FOR PRODUCING METAL STRIPS
PROCEDE DE FABRICATION DE BANDES METALLIQUES

(30) Priorität: 02.09.2004 DE 102004042481
(43) Veröffentlichungstag der Anmeldung: 16.05.2007
(73) Patentinhaber: Stuth, Theodor, 41464 Neuss (DE)
(72) Erfinder: Stuth, Theodor, 41464 Neuss (DE)
(74) Vertreter: Borkowski, Jens
(86) Internationale Anmeldenummer: PCT/EP2005/009414
(87) Internationale Veröffentlichungsnummer: WO 2006/024526

(56) Entgegenhaltungen:
- EP-A- 1 327 487
- DE-A1- 2 905 508
- DE-A1- 4 101 919
- DE-A1- 10 005 861
- GB-A- 455 360
- GB-A- 191 227 147
- US-A- 2 729 580
- US-A- 3 380 277
- US-A- 3 722 073
- PATENT ABSTRACTS OF JAPAN Bd. 010, Nr. 049 (C-330), 26. Februar 1986 (1986-02-26) & JP 60 194032 A (SUMITOMO KINZOKU KOUZAN KK), 2. Oktober 1985 (1985-10-02)
- PATENT ABSTRACTS OF JAPAN Bd. 016, Nr. 277 (C-0954), 22. Juni 1992 (1992-06-22) & JP 04 072036 A (NIPPON STEEL CORP), 6. März 1992 (1992-03-06)
- AMERICAN SOCIETY FOR METALS: "Metals Handbook, Ninth Edition" 1983, AMERICAN SOCIETY FOR METALS , USA 6 , XP002357346 Seiten 436-445 Tabelle 4 Seite 437, Absatz 1
- PATENT ABSTRACTS OF JAPAN Bd. 008, Nr. 035 (M-276), 15. Februar 1984 (1984-02-15) & JP 58 192607 A (SUMITOMO KINZOKU KOGYO KK), 10. November 1983 (1983-11-10)
- KEINTZEL G ET AL: "AUTOMATISATIO DE LA LIGNE DE DECAPAGE ET DU TRAIN TANDEM COUPLES CHEZ BETHLEHEM STEEL" CAHIERS D'INFORMATIONS TECHNIQUES DE LA REVUE DE METALLURGIE, REVUE DE METALLURGIE. PARIS, FR, Bd. 98, Nr. 10, Oktober 2001 (2001-10), Seiten 861-871, XP001104451 ISSN: 0035-1563
- PATENT ABSTRACTS OF JAPAN Bd. 008, Nr. 221 (E-271), 9. Oktober 1984 (1984-10-09) & JP 59 105264 A (YUASA DENCHI KK), 18. Juni 1984 (1984-06-18)
- SCHNEIDERS E: "Pore-free welding of high purity nickel pipe line for NaOH" SCHWEISSEN UND SCHNEIDEN, Bd. 16, Nr. 2, Februar 1964 (1964-02), Seiten 41-44, XP008056828 Duesseldorf
- PATENT ABSTRACTS OF JAPAN Bd. 006, Nr. 058 (M-122), 15. April 1982 (1982-04-15) & JP 57 001579 A (KOBE STEEL LTD), 6. Januar 1982 (1982-01-06)

## Beschreibung

### A. Anwendungsgebiet

Die Erfindung betrifft ein Verfahren zur Herstellung von Metallbändern durch Verbindung von elektrolytisch hergestellten Kathodenblechen, insbesondere zu coil- und walzbaren Rohbändern, und zur Herstellung von Metallbändern konstanter Stärke auch aus Rohbändern, die aus ungleich dicken Kathodenblechen entstandenen sind.

Unter Bändern werden flache langgestreckte Metallkörper verstanden, die erhebliche Breiten (bis über 1 m) aufweisen können. Der Begriff "Bänder" wird in dem Sinne verwendet, wie er sich für Metallbänder (z.B. "Warmband" oder "Kaltband") eingebürgert hat.

### B. Stand der Technik

Durch wässrige Elektrolyse können u.a. die folgenden einelementigen Metalle als Kathodenbleche hergestellt werden:

| **Metall** | **Kathodenblech oder Flakes?** | **Permanentkathode oder Starter Sheet?** | **Material des Kathodenblechs** |
|---|---|---|---|
| Chrom | K/F | P | E |
| Mangan | K/F | P | E |
| Eisen | K | P | E |
| Kobalt | K | P/SS | E |
| Nickel | K | SS | - |
| Kupfer | K | P/SS | E |
| Zink | K | P | A |
| Cadmium | K | P | E |
| Zinn | K | P | E |
| Blei | K | SS | - |

| | | | |
|---|---|---|---|
| Erläuterungen: K = Kathodenblech A = Aluminium F = Flakes E = Edelstahl P = Permanentkathode SS = Starter Sheet . | | | |

Hergestellt werden können im Wege der Elektrolyse nicht nur Abscheidung aus einem Element sondern im Wege der Co-Deposition auch Legierungen. Im Stand der Technik ist es bekannt, daß bei der Abscheidung durch Elektrolyse Metall in hochreiner Form anfällt. Unter "hochrein" soll die Freiheit von unerwünschten Bestandteilen verstanden werden. Die entstandenen Metallniederschläge sind praktisch frei von unerwünschten metallischen und nichtmetallischen Einschlüssen.

Aus Kathodenblechen lassen sich Bänder mit einem Reinheitsgrad erzeugen, der schmelzmetallurgisch selbst bei hohem apparativem Aufwand nicht erreicht werden kann: Bestimmte Unreinheiten (z.B. Selen bei der Herstellung von Nickel) lassen sich durch offenes Schmelzen nicht entfernen. Der offene Schmelzprozess ist verbunden mit Gasaufnahme beim Einschmelzen und Oxidbildung. Beseitigung von Unreinheiten und Vermeidung der Oxidbildung können nur durch Vakuumschmelzen erreicht werden. Derart schmelzmetallurgisch erzeugte Blöcke z.B. aus Nickel sind aber grobkörnig und mit Seigerungen durchsetzt; sie müssen deshalb umgeschmolzen werden.

Bei der Herstellung von Bändern auf schmelzmetallurgischem Wege können nichtmetallische Einschlüsse auf mehreren Produktionsstufen entstehen, z.B. in der Schmelzstufe durch nicht in die Schlacke überführte Oxidationsprodukte, Wandausbrüche aus dem Konverter und beim Vergießen der Schmelze durch Mitrisse von Schlacke aus dem Gießschnabel. Einschlussarme Bänder können ohne den Einsatz besonderer Anlagen (z.B. zum Elektro-Schlacke-Umschmelzen) nur bei Anwendung ununterbrochener extremer Sorgfalt auf allen Produktionsstufen erzielt werden. Auch dann können Einschlüsse auftreten, die - falls sie nicht durch spezielle Detektoren aufgespürt werden - vielfach erst in späteren Verarbeitungsstufen, insbes. beim Kaltwalzen und beim Tiefziehen, sichtbar werden. Demgegenüber können Kathodenbleche praktisch einschlussfrei hergestellt werden. Die Ablagerung von nichtmetallischen Partikeln auf der Kathode kann durch einfache Maßnahmen wie Filterung des Elektrolyten, Überziehen von Anoden und Kathoden mit Beuteln oder Anwendung der divided cell technology verhindert werden.

Es ist bekannt, daß einzelne Kathodenbleche gewalzt werden können.

### I. Herstellung von Bändern aus Blechen gleicher Stärke bzw. aus aus einem einzelnen Blech geschnittenen Blechstreifen gleicher Stärke

Bänder sind aus Blechen bereits vor mindestens 100 Jahren hergestellt worden. Der Stand der Anlagentechnik erlaubte damals die direkte Herstellung von Bändern großer Länge nicht; sie setzt in der Warmverarbeitungsstufe mehrgerüstige Warmwalzstraßen voraus, die erst ab ca. 1925 eingesetzt wurden. Bis dahin wurden Bleche zur Erzeugung von Bändern zunächst überlappend genietet, später überlappend geschweißt und schließlich stoßgeschweißt (US 1,131,037) und die Schweißnaht geschmiedet (GB 727,985).

Da Bänder aus Blechen ungleicher Stärke nicht verwendbar sind, wurden in allen o.a. Fällen Bleche gleicher Stärke eingesetzt. Die zu verbindenden Bleche wurden durch Walzen als Tafelbleche erzeugt; dadurch konnte sichergestellt werden, daß die zu verbindenden Bleche gleich dick waren.

Kathodenbleche weichen aber herstellungsbedingt in ihren Dicken stark voneinander ab. Die Dickenabweichungen betragen je nach Metall und Hersteller zwischen 50% und 150% der Mindestdicke (vgl. unten D.111.).

Es ist vorgeschlagen worden (DE 2905508), ein Blech in Streifen zu schneiden und die so gewonnenen Streifen, die eine konstante Stärke aufweisen, zu verbinden. Da das derart hergestellte Band aus einer einzigen Platte produziert wird, können nur eng begrenzte Dickenabweichungen auftreten. Das Problem unterschiedlicher Stärken der Kathodenbleche wird dadurch umgangen; die größeren Längen gehen allerdings zu Lasten der Breite der Bänder.

Ausgangspunkt von CH 642874, für das als Priorität DE 2905508 in Anspruch genommen wird, ist die angeblich "ungünstige Form der Rohware" von Kathodenblechen. Die Plattenform soll in einem "kalten" Verfahren in eine Stangenform gebracht werden, da sich die Plattenform für eine direkte Umsetzung in langgestreckte Formen nicht eignen soll. Gerade dies ist aber mit dem erfindungsgemäßen Verfahren beabsichtigt. Den Ansprüchen von CH 642874 zufolge sollen auch ganze Platten aneinandergeschweißt, gespalten und alsdann gewalzt werden. Die Probleme, die sich beim Schweißen, Aufcoilen und Walzen ergeben, insbesondere der Umgang mit den unterschiedlichen Dicken der Kathodenbleche, werden nicht einmal erwähnt, geschweige denn gelöst.

Tatsächlich sind beim Walzen Dickenunterschiede zwischen verschiedenen, zu einem Band verbundenen Blechen nach dem Stand der Technik nicht beherrschbar. Aus Kathodenblechen hergestellte Bänder werden deshalb nur in Abmessungen angeboten, wie sie aus einer einzigen Platte hergestellt werden können.

### II. Verbindung elektrolytisch hergestellter Bänder und Bleche gleicher Stärke

### 1. Elektrolytisches Verbindungsverfahren

Die Verbindung elektrolytisch hergestellter Bänder ist bereits bekannt. In US 2,569,368 wird ein elektrolytisches Verbindungsverfahren für elektrolytisch hergestellte schmale und dünne Bänder beschrieben. Es wird insbesondere zur Herstellung von Endlosbändern empfohlen.

Die zu verbindenden Enden werden zunächst abgebogen. Die Enden dienen - nachdem die Bleche fixiert sind - als Seitenwand einer elektrolytischen Zelle. Es wird nicht nur die durch das Abbiegen hergestellte Senke elektrolytisch mit Metall gefüllt, es wird auch ein gewisser Überstand erzeugt. Nachdem das Band aus der Zelle gelöst ist, wird zunächst der Überstand, alsdann das in der früheren Senke abgeschiedene Material mit den die Senke begrenzenden Blechenden bis auf das Niveau der Bänder abgeschliffen. Der Vorteil dieses Verfahrens liegt darin, daß Blech und Verbindungsnaht annähernd den gleichen Aufbau besitzen, da die Verbindungsnaht in der gleichen Weise hergestellt wird wie die zu verbindenden Bleche. Die Verbindung erfolgt außerdem auf kaltem Wege, so daß die bei Anwendung von Schweißverfahren auftretenden Probleme vermieden werden.

Dieses Verfahren soll nur für die Verbindung dünner Bänder eingesetzt werden; es ist auch allenfalls bei Verbindung dünner Bänder ökonomisch vertretbar. Wegen der Herstellung einer Senke, die mit elektrolytisch abgeschiedenem Material zu füllen ist, beträgt die Stärke des abzuscheidenden Materials immer ein Mehrfaches der Dicke der Ausgangsbänder. Um Bleche von 4 bis 6 mm Stärke - der Mindestdicke von Kathodenblechen - abkanten zu können, ist ein bestimmter Biegeradius erforderlich und ein mehrere cm langes Stück muß in der Abkantbank festgeklemmt werden, damit das Blech beim Abkanten nicht aus dem Niederhalter herausgezogen wird. Die Blechenden müßten daher nach dem Abkanten gekürzt werden, damit die Senke nicht zu groß wird. Der elektrolytische Aufbau von Schichten geschieht sehr langsam; die Abscheidung von Kathodenblechen nimmt mindestens eine Woche in Anspruch (Nickel: 5 - 10 Tage bei Abscheidung auf Starter Sheets, für deren Erzeugung 1,5 bis 3 Tage erforderlich sind; Kupfer: bei Verwendung von Starter Sheets ca. 10 bis 14 Tage, bei Einsatz von Permanentkathoden 5 bis 14 Tage). Die Ausfüllung einer Senke mit einem Querschnitt, der größer ist als die Dicke der zu verbindenden Bleche, benötigt entsprechend mehr Zeit.

Nach diesem Verfahren scheidet daher die Herstellung von Bändern aus dicken Blechen - insbesondere bei sequentieller Anwendung des Verfahrens - schon aus Gründen der Zeitdauer und der daraus resultierenden Kapitalbindung aus.

### 2. Verbindung durch Schweißen

In DE 2905508 und CH 642874 wird die Verbindung von Kathodenblechen aus Nickel durch Schweißen, insbesondere durch Stumpfschweißen oder unter Verwendung hochreiner Nickel-Schweißelektroden vorgeschlagen.

Bei aus Kathodenblechen durch Spalten hergestellten "Stangen" kann Abbrennstumpfschweißen sinnvoll sein, nicht aber bei ganzen Kathodenblechen. Zwar wird auch Warmband in Erzeugungsbreite durch Stumpfschweißen verbunden, Nickel, insbesondere elektrolytisch hergestelltes Nickel, ist aber deutlich härter, und die Stauchkräfte müssen dementsprechend größer sein. Die auf dem Markt angebotenen Abbrennstumpfschweißanlagen können daher Nickelbleche in Form ganzer Kathoden nicht verbinden.

Um den Reinheitsgrad der Schweißstellen nicht herabzusetzen, wird das Schweißen mit Elektroden aus Reinnickel vorgeschlagen. Auf die Ummantelung der Elektroden wird also verzichtet. Beim Lichtbogenhandschweißen hat aber die Ummantelung eine unersetzliche Funktion: durch Bildung eines Schlackenfilms isoliert sie die Schmelze von der Luft, durch Zersetzung bildet sie einen aus CO, CO₂ und H₂ bestehenden Schutzgasschirm aus. Schweißversuche mit Reinnickelelektroden haben gezeigt, daß eine stark porige, mit Löchern durchsetzte Schweißnaht entsteht. Die Naht reicht zwar aus, die Bleche zu verbinden, das Band kann aber nicht mit hohen Vor- und Rückzügen gewalzt werden, da es an der Schweißstelle reißen würde. Hohe Vor- und Rückzüge sind aber beim Walzen erforderlich, da bei den gegebenen Dickenunterschieden der Kathodenbleche die stärker zu reduzierenden dicken Bleche ohne Züge eine größere Breitenausdehnung erfahren würden als die dünneren Bleche. Das ist unerwünscht, da eine ungleichmäßige Breitenausdehnung nur zu Abfall führt und beim Walzen einen Coilschlag auslöst.

In DE 2905508 wird gefordert, daß die Schweißstellen einer thermischen Gefügebehandlung unterzogen werden, damit ein Material gleichmäßiger Weichheit erzielt wird. Das Schneiden eines Bleches löst an der Schnittkante eine starke Verformung aus, die in das Blech hineinstrahlt; die angrenzenden Blechteile werden nur gering verformt. Diese Blechteile liegen beim Schweißen in der Wärmeeinflusszone. Aus diesem Grunde und wegen der beim Schweißen erreichten hohen Temperaturen bildet sich dort ein Grobkorn. Die Forderung nach einer thermischen Gefügebehandlung zeigt, daß ein Schweißverfahren niedriger Energiedichte benutzt worden ist. Je niedriger die Energiedichte des Schweißverfahrens ist, desto breiter ist die Wärmeeinflusszone und umso gravierender sind die Gefügeänderungen. Solche Schweißverfahren sind - wie später deutlich wird - für die zu lösende Aufgabe aus anderen Gründen ohnehin nicht geeignet.

Mit dem durch DE 2905508 und CH 642874 repräsentierten Stand der Technik können Verbindungen von Kathodenblechen durch Schweißen nicht lochfrei und porenarm hergestellt werden.

### C. Aufgabe

Aufgabe der Erfindung ist es, ein Verfahren bereitzustellen, mit dem aus Kathodenblechen Bänder von konstanter Stärke herstellbar sind und dabei den durch wässrige Elektrolyse einmal erreichten hohen Reinheitsgrad von Metallen und die Einschlußfreiheit bei der Verarbeitung zu erhalten, wobei die unterschiedlichem Stärken der verbundenen Bleche aneinander angeglichen worden können. Es ist weiterhin Aufgabe
- den Gehalt an Schwefel in den Kathodenplatten zu reduzieren, wenn ansonsten der Schwefelgehalt so hoch ist, daß die Kathodenplatten beim Aufcoilen nicht gebogen werden können, ohne rissig zu werden
- die Kathodenplatten einfacher walzbar zu machen
- die Planheitsfehler von Kathodenblechen, die aus Starter Sheets erzeugt sind, zu beseitigen
- die durch Schweißen der Bleche und unterschiedlich starke Reduktion der verbundenen Bleche entstandenen Korngrößendifferenzen auszugleichen

Gelöst werden diese Aufgaben durch ein erfindungsgemäßes Verfahren nach den Ansprüchen 1 und 2. Vorteilhafte Ausgestaltungen sind in den Unteransprüchen erwähnt.

Mit dem erfindungsgemäßen Verfahren sollen Bleche durch lochfreie und porenarme Nähte zu coil- und walzbaren Rohbändern verbunden und Bleche unterschiedlicher Stärke zu Bändern konstanter Stärke verarbeitet werden.

Zur Herstellung von Bändern wird daher vorgeschlagen, elektrolytisch in Gestalt von Kathodenblechen hergestelltes Halbzeug ggf. zu entgasen und ggf. zu entschwefeln und seine Kristallstruktur ggf. umzuwandeln, durch Schweißen miteinander zu verbinden und Dickenunterschiede des Ausgangsmaterials durch ein spezielles Walz- oder Walzziehverfahren zu beseitigen. Das durch das Verbinden der Bleche und ggf. den unterschiedlichen Reduktionsgrad entstandene uneinheitliche Gefüge wird in einem von der Metallart abhängigen Verfahren in ein einheitliches Gefüge umgewandelt. Durch das erfindungsgemäße Verfahren wird die Reinheit und Einschlußfreiheit eines elektrolytisch hergestellten Halbzeugs aus Metallen bei der Verarbeitung nicht beeinträchtigt.

Die erfindungsgemäß hergestellten Bänder lassen sich besonders vorteilhaft überall dort einsetzen, wo Metallbänder hoher Reinheit und/oder einschlußfreie Bänder benötigt werden.

Unter "ganzen" Kathodenblechen werden Bleche verstanden, deren Breiten- und Längenabmessungen nach ihrer Gewinnung durch Elektrodeposition allenfalls durch Besäumen reduziert worden sind, die also im Wesentlichen ihre ursprünglichen Abmessungen nach der Herstellung aufweisen und nicht zerkleinert wurden.

### I. Verbindungstechnik für Kathodenbleche

Die Verbindung der Kathodenbleche muß aus mehreren Gründen lochfrei und fast völlig porenfrei sein; es reicht also nicht aus, daß durch die angewandte Verbindungstechnik die Bleche überhaupt verbunden werden können.

Die Schweißnähte werden zu einem Teil des fertig gestellten Bandes. Eine Schweißnaht in einem angefasten 5 mm starken WIG geschweißten Blech ist ca. 10 mm breit. Wird das Band auf 0,1 mm reduziert, ist die Schweißnaht 50 cm breit. Nach Fertigstellung des Bandes darf sich der Bereich einer ausgewalzten Schweißnaht nicht von den ausgewalzten Kathodenblechen unterscheiden.

Löcher schließen sich beim Walzen nicht mehr; ein löcheriges Band wäre nicht vermarktbar. Bei dem vorgeschlagenen Verfahren wird mit starken Haspelzügen gewalzt; Poren und Löcher stellen dann bei der Verarbeitung Sollbruchstellen dar, die Bandreißer auslösen. Bandreißer führen zu schweren Walzenbeschädigungen und Anlagenstillständen. Das Risiko von Bandreißern darf bei dem Band aus Kathodenblechen nicht höher sein als bei kaltzuwalzenden Warmbändern, ansonsten wird kein Walzwerk bereit sei, das Band zu walzen.

Das Band muß außerdem deshalb porenfrei sein, weil oxidierende Bestandteile in eingeschlossenen Gasen die Wände der Poren oxidieren. Während Poren, die reduzierende Gase (z.B. H₂) enthalten, sich nach Entgasung durch Walzen verschweißen lassen, lassen sich oxidierte Porenwände durch Walzen - auch durch Warmwalzen - nicht mehr verschweißen, es sei denn, der Reduktionsgrad wäre so hoch, daß die Oxidschichten, die härter, d.h. weniger verformbar sind als das Grundmaterial, bei dem angewandten Verformungsgrad reißen, so daß blankes Material verschweißen kann. Dazu sind aber Reduktionsgrade von > 60% in einem Walzstich erforderlich, die nur mit Kaltwalzgerüsten spezieller Bauart (Sendzimir) erreichbar sind. In jedem Fall verbleiben die Oxide als harte nicht-metallische Einschlüsse im Grundmaterial, die z.B. die Tiefziehfähigkeit behindern. Oxidierte Poren führen bei starker Reduktion des Bandes zu Ausblühungen an der Oberfläche, im Material eingeschlossen beeinträchtigen sie aufgrund ihrer Kerbwirkung die Festigkeit.

Das zu entwickelnde Verfahren steht und fällt deshalb mit einwandfreien Schweißnähten.

### II. Verhinderung der Kaltsprödigkeit

An den Korngrenzen abgelagerte Schwefelverbindungen führen beim Kaltumformen zu Kaltsprödigkeit. Beim Aufcoilen der verbundenen Kathodenbleche würde Kaltsprödigkeit zu Oberflächenrissen führen, die sich durch Walzen nicht mehr schließen lassen.

### III. Änderung des Kristallgefüges

Kathodenbleche weisen meist eine feinkörnige faserige oder kolumnare Struktur rechtwinkelig zur Blechebene auf. Sie sind deshalb besonders schwer verformbar. Die Bleche sollen deshalb auch einfacher walzbar gemacht werden.

### IV. Reduzierung der Dickenabweichungen von Kathodenblechen

In industriellem Maßstab werden Kathodenbleche in Fußballfeld-großen Anlagen hergestellt; u.a. aufgrund der unterschiedlichen Umströmung mit Elektrolytflüssigkeit, der sich beim Durchströmen der Anlage ändernden Konzentration an Metallionen, des Zeitunterschiedes beim Einsetzen der Kathodensubstrate und der Unterschiede der an jeder Kathode wirksamen elektrischen Spannung haben die Bleche eine um mehrere mm schwankende Dicke.

**Abmessungen von Kathodenblechen**

| **Material** | **Hersteller** | **Breite** | **Länge** | **Dicke** | **Dickenabweichung** | **Gewicht** |
|---|---|---|---|---|---|---|
| | | mm | mm | mm | in % | kg |
| Kupfer | Montanwerke Brixlegg | 1.000 | 1.000 | 5 - 10 | 100 | 45 - 60 |
| | AG | | | | | |
| | Glogów I | 880 | 880 | 10 - 25 | 150 | 80 - 130 |
| | Glogów II | 1030 | 1030 | 10 - 25 | 150 | 80 - 130 |
| | Legnica | 910 | 780 | 10-20 | 100 | 95 |
| Nickel | Norilsk Nickel | 855 | 1.055 | 4 - 6 | 50 | 15 - 40 |

Auf die Maßhaltigkeit der durch Elektrolyse entstehenden Bleche wird bei der Herstellung kaum geachtet. Das liegt daran, daß bis jetzt Kathodenbleche allenfalls als einzelne Bleche verarbeitet werden; der weit überwiegende Teil wird eingeschmolzen oder zu Squares verarbeitet.

### V. Korrektur von Planheitsfehlern

Bei Verwendung von Kathodensubstraten fällt das elektrolytisch abgeschiedene Metall in Plattenform an. Die Kathodensubstrate, auf denen sich das Metall niederschlägt, sind entweder sog. Starter Sheets oder Permanentkathoden.

Die auf Permanentkathoden sich ablagernden Metalle werden von dem Kathodensubstrat geschält; die Kathodensubstrate werden danach wieder eingesetzt. Permanentkathoden sind relativ dick und verziehen sich allenfalls geringfügig. Die in dieser Technik erzeugten Bleche sind deshalb plan.

Starter Sheets sind elektrolytisch hergestellte dünne Folien. Aus Kostengründen werden die Starter Sheets möglichst dünn gehalten; sie können sich daher verziehen und verbiegen. Starter Sheets hängen dann nicht plan, sondern leicht wellig im Elektrolysebad. Da die Starter Sheets in die entstehenden Kathodenbleche einwachsen, werden auch die aus ihnen entstehenden Kathodenbleche leicht wellig. Die Maß- und Formabweichungen werden von den Abnehmern toleriert, weil die Blechform der Kathodenbleche bei der weiteren Nutzung derzeit keine Rolle spielt. Die Bleche werden meist zerschnitten und als "cut cathodes" in Fässern als Verpackungseinheiten angeboten.

Werden Bänder aus Kathodenblechen hergestellt, die ihrerseits unter Verwendung von Sheets gewonnen wurden, muß die mangelnde Planheit der Bleche korrigiert werden.

### VI. Erzeugung gleicher Korngrößen

Ein aus unterschiedlich dicken Kathodenblechen durch Schweißen hergestelltes Band weist zwangsläufig unterschiedliche Korngrößen auf als Folge
- von Gefügeänderungen durch Wärmeentwicklung beim Verbinden der Bleche durch Schweißen
- unterschiedlicher Verformung, da die Dicke der einzelnen Bleche aneinander angeglichen werden muß

Ein Band mit unterschiedlichen Korngrößen reagiert bei der Weiterverarbeitung auf einheitliche Prozessbedingungen unterschiedlich. Es kann daher nicht prozesssicher verarbeitet werden. Ein solches Band dürfte daher nicht verkaufsfähig sein. Es muß deshalb sichergestellt sein, daß nach mehreren Walz- und Glühvorgängen keine aus der ursprünglich unterschiedlichen Korngröße der Bleche resultierenden Unterschiede feststellbar sind.

### D. Lösung

Erfindungsgemäß wird vorgeschlagen, Bänder direkt - d.h. ohne den Umweg über eine Schmelzstufe - aus Kathodenblechen herzustellen. Die durch das vorgeschlagene Verfahren herstellbaren Bänder sind in Breite und Dicke allerdings begrenzt durch die Abmessungen des Ausgangsmaterials.

### I. Schweißen

Zur Herstellung eines Bandes müssen die Kathodenbleche durch Schweißen verbunden werden. An das Schweißverfahren werden folgende Anforderungen gestellt:
- die Schweißnaht soll porenarm und lochfrei sein
- Schweißzusatzwerkstoffe dürfen den Reinheitsgrad der Bleche nicht herabsetzen
- es müssen Bleche unterschiedlicher Dicke verbunden werden können
- die Schweißnaht muß gute Zugfestigkeitswerte und eine befriedigende Dehnung aufweisen
- die Schweißnaht muß erforderlichenfalls so nachbehandelt werden können, daß das Band nach dem Schweißen gewalzt werden kann.

### 1. Herstellung porenarmer und lochfreier Schweißnähte

### a) Verhinderung der Aufnahme von Gasen aus der Umgebungsluft

Verbindung durch Schmelzschweißen setzt die Verflüssigung der Blechkanten voraus. Die meisten flüssigen Metalle haben eine hohe Affinität zu dem in der Luft gelösten Sauerstoff und Stickstoff. Diese werden von der Schmelze aufgenommen. Beim Erkalten der Schmelze sinkt ihre Lösungsfähigkeit für Gase. Die Gase werden daher wieder abgegeben; soweit sie die abkühlende Schmelze nicht mehr verlassen können, werden sie in der Schweißnaht eingeschlossen und bilden Poren.

Beim Schweißen kann ein Schweißnahtschutz durch eine Vielfalt von Verfahren erreicht werden: Vakuum, Schlackenbildung und Schutzgas. Das Schweißen unter Vakuum ist die technisch beste Lösung, aber gerade im vorliegenden Fall besonders anlageintensiv. Die Isolierung der Scheißnaht durch Schlackenbildung scheidet hier aus, weil nicht mit Sicherheit verhindert werden kann, daß das Metall der Schweißnaht durch die Schlacken verunreinigt wird. Zweckmäßig ist deshalb das Schweißen unter Schutzgas. Da Aktivgase oxidierend wirken, sollten inerte Gase (z.B. reines Argon) eingesetzt werden.

### b) Ausgasen der im Werkstoff eingeschlossenen Gase vor dem Schweißen

Die bloße Abschirmung der Schweißnaht der Bleche kann aber - je nach Metallart und Herstellungsverfahren der Bleche - unzureichend sein. Reihenversuche mit dem Ziel der Festlegung eines geeigneten Vorbehandlungs- und Schweißverfahrens haben ergeben, daß sich in Einzelfällen zwar schmelzmetallurgisch erzeugte Bleche und geglühte Kathodenbleche, nicht aber elektrolytisch erzeugte Bleche in ihrem Herstellungszustand durch eine porenarme und lochfreie Schweißnaht verbinden lassen. Das gilt auch dann, wenn unter Schutzgas geschweißt wird. Bei nicht unter Schutzgas geschweißten schmelzmetallurgisch hergestellten Blechen und geglühten Kathodenblechen entstehen Poren - wie oben dargestellt - erst bei Abkühlung der Schweißnaht. Dagegen können bei elektrolytisch erzeugten Blechen in ihrem Herstellungszustand bereits beim Schweißen auch bei Verwendung von Schutzgas Poren auftreten. Die Schmelzbadbewegungen können so heftig sein, daß es zum "Durchschießen" der Schmelze kommt und damit in der Naht Löcher entstehen. Um eine durch das Glühen der Kathodenbleche hervorgerufene Änderung der Kristallstruktur als Ursache für ihre Schweißbarkeit auszuschalten, wurden Schweißversuche nach einer langen (24 Std.) Glühung bei geringen Temperaturen (250 bis 400°C bei Nickel) vorgenommen. Auch diese Bleche ließen sich problemlos schweißen. Die Poren- und Lochbildung, die beim Schweißen elektrolytisch erzeugten Materials auftreten kann, muß also andere Ursachen haben, als die Aufnahme von Sauerstoff und Stickstoff aus der Luft.

Bei der Elektrolyse bildet sich atomarer Wasserstoff, der z.T. - und zwar in atomarer Form - in das abgeschiedene Metall eingebaut wird. Das in Einzelfällen beobachtete unterschiedliche Verhalten von schmelzmetallurgisch erzeugten Blechen und geglühten Kathodenblechen einerseits und elektrolytisch erzeugtem Blech im Rohzustand andererseits ist auf den in elektrolytisch erzeugten Blechen absorbierten Wasserstoff zurückzuführen. Bei der Auflistung der in Kathodenblechen enthaltenen Elemente, bei der i.d.R. ppm - Gehalte angegeben werden, werden Wasserstoffgehalte in aller Regel nicht genannt. Das liegt aber nicht daran, daß Kathodenbleche keinen Wasserstoff enthielten, sondern daran, daß der Wasserstoffgehalt mit naßchemischen Verfahren nicht feststellbar ist. Die Feststellung des Wasserstoffgehaltes wird dadurch erschwert, daß er nicht gleichmäßig verteilt eingelagert ist.

Phasendiagramme zeigen, daß die meisten Metalle mit steigenden Temperaturen mehr Wasserstoff aufnehmen können; die Aufnahmekapazität verdoppelt sich häufig schlagartig, wenn das Material flüssig wird. Auf den ersten Blick läßt sich das Kochen der Schweißnaht mit dem Wasserstoffgehalt der Bleche also nicht erklären. Das gilt um so mehr, als z.B. die für das Schweißen von Nickel empfohlenen Schutzgase 5% bis 10% (molekularen) Wasserstoff (H₂) enthalten. Die Beifügung von Wasserstoff zum Schutzgas wird gerade zur Vermeidung von Poren in der Schweißnaht empfohlen. Nickel reagiert aber offensichtlich auf atomaren und molekularen Wasserstoff unterschiedlich.

Aus Phasendiagrammen von Metallen und Wasserstoff kann die Löslichkeit des Wasserstoffs im Metall im Gleichgewichtszustand entnommen werden. Wasserstoff verbindet sich nur in geringem Maße mit Metall zu einer festen Lösung; befindet er sich nicht in fester Lösung, wird er zwischen den Kristallen eingelagert. Einlagerungen werden von Phasendiagrammen nicht erfaßt. Da bei elektrolytischer Abscheidung besonders feinkörniges Material entsteht, ist auch die Zahl der Mikroporen besonders groß, in denen sich Wasserstoff ablagern kann. Elektrolytisch erzeugte Metalle können daher häufig deutlich mehr Wasserstoff aufnehmen, als der Gleichgewichtszusammensetzung entspricht. Das kann dazu führen, daß die Wasserstoffkonzentration im Metall extrem hoch wird. Auch bei Außendrücken von 1 atm können sich elektrolytisch hergestellte Werkstoffe so verhalten, als stünden sie unter hohem Druck des eingelagerten Wasserstoffs. Dieser Druck kann mehrere tausend Bar betragen.

Während die Aufnahmekapazität der meisten Metalle für Wasserstoff in fester Lösung mit zunehmender Temperatur steigt, sinkt das Speichervermögen für den in Poren eingelagerten Wasserstoff mit steigender Temperatur. Bei der Verflüssigung des Metalls beim Schweißen wird der eingeschlossene Wasserstoff ausgetrieben; er entspannt sich unter starker Volumenzunahme. was zu einer Störung der Dampfkapillare beim Elektronenstrahl- und Laserschweißen und zu einer Art Kochen der Schweißschmelze führt. Das "Kochen" der Schweißnaht wird möglicherweise noch durch das Ausgasen der Randbereiche der Schweißnaht unterstützt.

Da der größte Teil des in Kathodenblechen eingeschlossenen Wasserstoffs nicht gebunden ist, kann das Kochen der Schweißnähte dadurch vermieden werden, daß der Wasserstoff vor dem Schweißen ausgegast wird. Als besonders zweckmäßig hat sich eine Glühbehandlung unter Vakuum erwiesen, weil dabei der austretende Wasserstoff abgepumpt wird.

### c) Entgasen der Schweißschmelze

Durch den aus dem Metall ausgasenden Wasserstoff können sich in der Schmelze Blasen, wenn auf eine entgasende Vorbehandlung der Bleche verzichtet wird. Angesichts der bei dem vorgeschlagenen Verfahren hohen Anforderungen an die Porenfreiheit ist es dann wichtig, daß die sich bildenden Gasblasen die Schmelze vor dem Erstarren verlassen.

Beim Schweißen mit niedriger Temperatur ist die Schmelze dickflüssig; das hat den Vorteil, daß sie nicht durch den Wurzelspalt versacken kann. Gasblasen sind aber in einer dickflüssigen Schmelze weniger beweglich, werden im Schmelzbad festgehalten und bei Abkühlung der Schmelze eingeschlossen. Es bilden sich deshalb vermehrt Poren. Für das Schweißen der Kathodenbleche wird vorgeschlagen, hohe Schweißtemperaturen anzuwenden, damit eine dünnflüssige Schmelze entsteht. Die Viskosität der Schmelze soll weniger als 4 mNsm⁻² betragen. Die Gasblasen können dann leichter aufsteigen und das Schmelzbad verlassen. Für das Schweißen der Kathodenbleche sollen deshalb Schweißverfahren hoher Energiedichte benutzt werden. Damit eignen sich insbesondere WIG-, MIG-Schweißen und Plasmaschweißen. Beim WIG-Schweißen können höhere Schmelzbadtemperaturen durch Einsatz von Helium statt Argon als Schutzgas erreicht werden, da Helium eine höhere lonisationsenergie hat.

Maßnahmen, die auf einen schnellen Wärmeabfluß zielen, sollen vermieden werden, um die Abkühlungsgeschwindigkeit der Schmelze zu reduzieren. Das läßt den Gasblasen mehr Zeit, aus der erstarrenden Schmelze zu entweichen.

### d) Eingrenzung geeigneter Schweißverfahren

Die zu verbindenden Bleche könnten grundsätzlich durch Abbrennstumpfschweißen oder durch Schmelzschweißen verbunden werden. Abbrennstumpfschweißen kann an den erforderlichen hohen Stauchkräften scheitern, etwa wenn ganze Kathodenplatten aus Nickel verbunden werden sollen. Die Schmelzschweißverfahren lassen sich nach ihrer Energiedichte, der Schweißart (Wärmeleitungs- oder Tiefschweißen) und danach unterscheiden, ob Schweißzusätze erforderlich sind, die nicht aus den reinen Metallen bestehen.

Kennzeichen verschiedener Schweißverfahren und Abgrenzung der für das Schweißen von Kathodenblechen geeigneten Verfahren

| **Verfahren** | **Energiedichte** | **Schweißart** | **Elektroden** | |
|---|---|---|---|---|
| | **Watt/cm ² bis** | **Wärmeleitung (W) Tiefschweißen (T)** | **mit Mantel** | **ohne Mantel** |
| Gasschmelzschweißen | 10² | W | ja | ja |
| Lichtbogenhandschweißen | 10³ | W | ja | nein |
| WIG-Schweißen | 10³ | W | nein | ja |
| MIG-Schweißen | 10⁴ | W | nein | ja |
| Plasmaschweißen | 10⁵ | W | nein | ja |
| Plasmaschweißen | 10⁶ | T | - | - |
| Elektronenstrahlschweißen | 10⁷ | T | - | - |
| Laserschweißen | 10⁹ | T | - | - |

Die Schweißverfahren, die die geringste Energiedichte haben, nämlich Gasschmelz- und Lichtbogenhandschweißen, benötigen funktionale Schweißzusätze. Die zum Schweißen empfohlenen Schweißzusätze (für das Schweißen von Reinnickel z.B. Schweißzusätze aus Werkstoff 2.4155) und die Inhaltsstoffe der Ummantelung würden aber den Reinheitsgrad im Schweißnahtbereich herabsetzen. Außerdem ist die Energiedichte dieser Verfahren zur Erzeugung einer dünnflüssigen Schmelze zu gering. Beide Verfahren scheiden daher sowohl wegen unzureichender Energiedichte als auch wegen Verwendung von Mantelelektroden aus.

Für das Schweißen von Kathodenblechen, insbesondere von Blechen aus Nickel, lassen sich aufgrund ihrer Energiedichte, mit der eine dünnflüssige Schmelze erzielt werden kann, folgende Verfahren einsetzen: WIG-, MIG-, Plasma-, Elektronenstrahl- und Laserschweißen.

WIG- und Plasmaschweißen verwenden nicht-schmelzende Wolframelektroden; das Schweißen nach diesen Verfahren ist ohne Zusätze oder mit Zusätzen aus Reinmetallstäben möglich. Beim MIG-Schweißen wird eine abschmelzende Metallelektrode verwandt. Als Elektrode kann ein Draht aus dem reinen zu verbindenden Metall eingesetzt werden.

Elektronenstrahl- und Laserschweißen kommen ohne Schweißzusätze aus. Sie arbeiten mit Elektronen- bzw. Photonenstrahlen so hoher Energiedichte, daß die im Strahlenfocus liegende Werkstückoberfläche verdampft. Im Werkstück bildet sich ein vertikaler Dampfkanal (Dampfkapillare), der ein Tiefschweißen ermöglicht. Dazu ist eine kritische Intensität des Strahls ab etwa 10⁶ W/cm² erforderlich. Hinter dem in Schweißrichtung sich fortbewegenden Dampfkanal fließt die Schmelze wieder zusammen und bildet bei Abkühlung die Schweißnaht (Stichlochmethode). Damit die Kapillare nicht zusammenfällt, müssen der Dampfdruck in der Kapillare einerseits und der hydrostatische Druck und die Oberflächenspannung der Schmelze andererseits im Gleichgewicht stehen. Laser- und Elektronenstrahlschweißen reagieren deshalb empfindlich auf Störungen im Schmelzfluß, die sich auf die Stabilität der Dampfkapillare auswirken.

Die hohe Energiedichte dieser Strahlverfahren, die z.T. mehrere Größenordnungen über der anderer Schmelzschweißverfahren liegt, kann sich beim Schweißen von nicht-geglühten Kathodenblechen als Nachteil erweisen. Sie führt dazu, daß im Grundwerkstoff gelöste oder in Mikroporen eingeschlossene Gase (H₂) und gasförmige Reaktionsprodukte (HS, H₂S) nicht langsam ausgasen, sondern schlagartig frei werden und expandieren, so daß Mikroexplosionen ausgelöst werden. Wird ein Teil der Dampfkapillare durch dadurch hervorgerufene Schmelzbadbewegungen abgetrennt, können Poren und beim "Durchschießen" der Schmelze sogar Löcher entstehen. Laser- und Elektronenstrahlschweißen können deshalb ein Ausgasen der Bleche bei Gasgehalten und -verteilungen erforderlich machen, die z.B. für das WIG-, MIG- und Plasmaschweißen noch nicht störend sind.

Ein besonderer Vorteil der Verfahren, die mit Energiedichten ≤ 10⁶ W/cm² arbeiten, also des WIG-, MIG- und Plasmaschweißens, liegt demnach darin, daß bei Kathodenblechen mit unkritischem Schwefelgehalt auf eine Wärme- und/oder Vakuumbehandlung der einzelnen Bleche verzichtet werden kann und die damit verbundenen Ziele ggf. erst bei der ersten erforderlich werdenden Rekristallisationsglühung erreicht werden.

### 2. Reinheit der Schweißnaht und Verwendung von Schweißzusatzwerkstoffen

Das anzuwendende Schweißverfahren soll die Materialreinheit und die Materialeigenschaften in der Schweißnaht möglichst nicht dauerhaft negativ verändern.

Je nach dem angewandten Schweißverfahren kann die Schweißnaht durch das Material der beim Schweißen verwendeten Elektroden oder deren Mantel verunreinigt werden. Um eine Verunreinigung zu vermeiden, können mantellose Elektroden aus dem reinen zu verbindenden Metall eingesetzt werden. Dabei ist darauf zu achten, daß die Elektroden nicht ihrerseits eine hohe Wasserstoffbeladung aufweisen. Es kann aber auch gänzlich auf die Verwendung von Schweißzusatzwerkstoffen verzichtet werden.

### 3. Ausrichten von Blechen unterschiedlicher Dicke

Zweckmäßigerweise ist bei der Verbindung von Blechen unterschiedlicher Dicke die Verbindung so vorzunehmen, daß an Ober- und Unterseite des dünneren Blechs gleichgroße Überstände entstehen. Beim anschließenden Walzen werden dann die Überstände gleichmäßig von den den Walzspalt begrenzenden Walzen erfaßt.

Vor der Verbindung können die Kanten der zu verbindenden Bleche relativ zueinander ggf. bis zu mehreren mm nach oben oder unten bewegt werden und in dieser Position so fixiert werden, daß der nachfolgende Verbindungsvorgang nicht behindert wird. Das ist durch den Einsatz von Tischen mit getrennten und höhenverstellbaren Platten und die Fixierung der Bleche durch Schweißlehren möglich.

### 4. Zugfestigkeit und Dehnbarkeit der Schweißnaht

Der Schweißnahtbereich muß so dehnbar sein, daß die Schweißnaht gebogen werden kann. Nur dann läßt das geschweißte Material sich aufcoilen. Außerdem muß die Festigkeit der Schweißnähte so groß genug sein, daß sie den Zug beim Aufhaspeln und später beim Walzen überstehen.

Zugfestigkeit und Dehnbarkeit der Schweißnaht hängen u.a. von dem Gehalt der Bleche an Verunreinigungen ab, die wie Schwefel niedrig schmelzende Eutektika bilden. Zu hohe Schwefelgehalte können durch Glühen in Wasserstoff beseitigt werden (vgl. D. V. 3). Weiter hängt die Zugfestigkeit und Dehnbarkeit von den beim Schweißen u.U. entstehenden Poren ab.

### 5. Nachbehandlung der Schweißnaht

Durch das Schweißen entstehen auf den Kathodenblechen oxidische Beläge (Anlauffarben und Glühzunder); sie können durch Bürsten mit Edelstahldrahtbürsten, Schleifen, Beizen oder Blankglühen beseitigt werden.

### II. Vorsortierung der Kathodenbleche vor dem Verbinden

Grundsätzlich können die Kathodenbleche ohne Vorsortierung miteinander verbunden werden. Die erfindungsgemäße Vorsortierung erleichtert aber den Walzprozess, da sie es ermöglicht, die störenden Dickensprünge im Rohband zu verkleinern. Falls die Dicke der Bleche an den Kanten abfällt, sind die Bleche zu besäumen. Die Vorsortierung verlangt allerdings eine Vermessung und Kennzeichnung der Bleche und die Einrichtung eines Zwischenlagers, aus dem einzelne Bleche gezielt entnommen werden können.

Werden die Kathodenbleche nach zu- oder abnehmender Dicke sortiert verbunden, so entsteht ein lang gestreckter Keil. Die Keilform ist für die Einebnung der Dickenunterschiede der Kathodenbleche besonders günstig. Bei einer Vorsortierung von 100 Kathodenblechen, deren Dicken um maximal 4 mm verschieden sind, beträgt die mittlere Differenz zwischen zwei Blechen nur 40 mµ. Diese Dickensprünge können von Kaltwalzgerüsten auch ohne schnell reagierende Anstellungen verarbeitet werden.

Ein keilförmiges Rohband hat darüber hinaus den Vorteil, daß die Haspelzüge mit der Banddicke variiert werden können. Beim Walzen mit Haspeln steht im wesentlichen nur das Band unter Zug, daß sich zwischen Auf- und Abhaspel befindet. Der auf den Haspeln aufgecoilte Bandteil wird durch das darüber liegende Band eingeklemmt und von den aktuellen Haspelzügen abgeschirmt. Dickere Bandabschnitte, die stärker reduziert werden müssen, können daher zur Vermeidung der Breitenzunahme mit höheren Haspelzügen gewalzt werden.

Um bei einer weniger aufwendigen Vorsortierung der Kathodenbleche ein Rohband zu erhalten, das von der Keilform nur wenig abweicht und daher deren Vorteile weitgehend teilt, ist es möglich, die Kathodenbleche nur nach vorher gewählten Dickenbereichen zu klassifizieren. Dazu wird das Intervall zwischen der Stärke des dicksten und dünnsten Bleches (Dickenintervall) in Teilintervalle unterteilt. Die Bleche werden dann diesen Teilintervallen, innerhalb derer keine Dickensortierung vorgenommen wird, zugeordnet. Die Abfolge der Bleche im Rohband ist dann derart, daß die Bleche eines Teilintervalls mit kleineren Dicken vor den Blechen eines Teilintervalls mit größeren Dicken angeordnet werden. Die Intervalle werden zweckmäßigerweise nach den vom in Aussicht genommenen Walzgerüst verarbeitbaren Dickenabweichungen festgelegt.

In den beschriebenen Sortierverfahren dient die Dicke der Bleche als die der Sortierung zugrunde liegende Meßgröße. Werden die Bleche auf gleiche Längen- und Breitenmaße besäumt, kann auch ihr Gewicht als die der Sortierung zugrunde liegende Meßgröße gewählt werden. Das führt zu weiteren, den oben dargestellten entsprechenden, Sortierverfahren, die besonders dann vorteilhaft sind, wenn die Dickentoleranzen der Bleche größer sind als die Abweichung in der mittleren Dicke zweier bei einer Dicken-basierten Sortierung aufeinander folgende Bleche.

### III. Umformung des Dickensprungs in einen Keil

Es muß verhindert werden, daß
- sich die Kanten des Dickensprungs in das Material der zuvor oder nachfolgend aufgecoilten Bleche eindrücken und dadurch Einkerbungen in den über und unter der Verbindungsstelle liegenden Windungen entstehen
- beim Egalisieren des Bandes durch Einwalzen der Kante Doppelungen entstehen

Die Verbindungsnaht und ggf. eine Nachbehandlung sind deshalb zweckmäßigerweise so auszulegen, daß ein fließender Übergang zwischen den verschiedenen Materialstärken hergestellt wird. Bei starken Dickenunterschieden der Platten kann die Verbindungsnaht keilförmig ausgebildet werden oder die Stufe an der Grenze der Platten durch Abtragen (z.B. mit Bandschleifgeräten) oder Stauchen in einen Keil verwandelt werden. Mit diesen Verfahren werden Abdrücke der Plattenkanten beim Aufcoilen zuverlässig vermieden, auch wenn im Weiteren mit höheren Rückzügen an den Haspeln gearbeitet wird. Aus dem unterschiedlichen Radius des Coils kann allerdings ein Coilschlag resultieren; ihm kann durch moderne Steuerungen entgegengewirkt werden.

Es kann zweckmäßig sein, den bereits in einen Keil umgewandelten Dickenunterschied zwischen aneinander angrenzenden Blechen weiter zu verlängern. Durch - ggf. reversierendes - Walzen des Bandes um den Bereich der Schweißnaht kann der Dickensprung in ein längeres keilförmiges Profil umgewandelt werden. Dies erleichtert die Weiterverarbeitung des Bandes mit höheren Geschwindigkeiten. Von der Einstellung des Anstiegswinkels und damit der Länge des Keils hängt es ab, mit welcher Geschwindigkeit das Band später gewalzt werden kann.

### IV. Einebnen

### 1. Dickenangleichung unverbundener Platten

Es kann zweckmäßig sein, die dicksten Bleche einzeln zu walzen, um die Querschnittsdifferenzen des zu verbindenden Materials zu vermindern.

Das Walzen von Blechen ist aber ein vergleichsweise unproduktives Verfahren: Es kann nicht mit Vor- und Rückzug gearbeitet werden; die dickeren Bleche werden daher beim Walzen breiter als die dünneren. Bei unterschiedlich dicken Blechen führt die unterschiedliche Breitenausdehnung zum Anfall von Schrott. Naturgemäß werden die Bleche durch das Walzen auch länger, so daß entsprechend lange Rollbahnen nach und - falls reversierend gewalzt wird - auch vor den Gerüsten erforderlich werden. Da die Fixierung des Bandes durch Haspel fehlt, ist es umso schwieriger, die Bleche beim Walzen auszurichten, je länger sie werden. Damit erhöht sich das Risiko, durch Verwalzen Schrott zu produzieren. Beim Abnehmen der Bleche von der Rollbahn hängt das Material durch; es entstehen leicht Knicke und Eckbeschädigungen.

Sinnvoll ist daher das Walzen einzelner Bleche vor ihrer Verbindung insbesondere dann, wenn die Stärken der Bleche oder auch nur der dicksten Bleche die Einlaufbanddicke vorhandener Bandwalzgerüste übersteigen Dabei sollten die Bleche auch nach der Reduzierung noch mehrere mm dick sind, damit sie noch einfach transportabel sind. Beim Walzen der Bleche können alle Bleche auf eine einheitliche Dicke (z.B. die Mindestdicke der Bleche) gebracht werden, die Dicke kann aber auch ungleich belassen werden und die weitere Dickenangleichung nach dem nachstehend beschriebenen Verfahren vorgenommen werden.

### 2. Dickenangleichung im Rohband

Das Einebnen der zum Rohband verbundenen Bleche kann durch Walzen, insbesondere Kaltwalzen, erfolgen oder durch Durchziehen, insbesondere durch Walzziehen. Eine Warmverformung wird man möglichst zu vermeiden suchen, sofern dabei das Material oxidiert und die Oxidschichten nur schwer zu beseitigen sind.

### a) Walzen

Die Weiterverarbeitung der verbundenen Bleche kann mit den beim Kaltwalzen eingesetzten Anlagen vorgenommen werden. An die erste und letzte Platte wird zweckmäßigerweise ein Vorband aus preiswerterem Material geschweißt, um den Schrottanfall in weiteren Verarbeitungsstufen zu minimieren.

Walzgerüste dienen dazu, Material von annähernd konstantem Querschnitt zu Material von annähernd konstantem Querschnitt zu reduzieren. Ein annähernd konstanter Querschnitt ist eine Voraussetzung dafür, daß Walzgerüste mit hohen Geschwindigkeiten (z.B. 1.000 m/min.) gefahren werden können. Die vorgeschlagene Weiterverarbeitung durch Walzen ist für den Fachmann überraschend, da die relativ großen Dickenabweichungen im Ausgangsmaterial dazu zwingen, mit sehr geringen Geschwindigkeiten (etwa 30 bis 50 m/min.) zu walzen. Während mit Walzenbiegeverfahren Profile im Querschnitt beseitigt werden können, sind stufenförmige Änderungen im Längsschnitt des Bandes bei schnellaufenden Anlagen nicht beherrschbar. Würde Material mit stufenartigen Längsschnittsänderungen bei hohen Geschwindigkeiten gewalzt, so würde das Band reißen.

Obwohl Bänder mit mehreren Millimeter betragenden Dickenabweichungen innerhalb Abständen von max. 1.000 mm bisher nicht gewalzt werden, ist Walzen als Verfahren zur Dickenangleichung hervorragend geeignet. Das liegt daran, daß Walzen grundsätzlich ein Verfahren zum Stauchen von Material ist. Die Anwendung starker Züge führt dazu, daß der Ausgleich unterschiedlicher Banddicken fast vollständig über Längen- und nicht über Breitenausdehnung erfolgt. Damit kann ein aus den unterschiedlichen Dicken ansonsten resultierender Schrottanfall vermieden werden.

Die starken Änderungen des Dickenprofils des Rohbandes auf kurze Entfernungen, die beim Walzen von Metallbändern bisher unbekannt sind, sind mit den üblichen Regelungskonzepten und hydraulischen Anstellungen nicht beherrschbar. Flexibles Walzen von Bändern mit einer über die Bandlänge nicht konstanten Banddicke setzt eine integrierte programmgesteuerte Walzspaltregelung voraus. Zum Walzen wird ein Gerüst mit hohen Haspelzügen und hoher Walzkraft bei möglichst kleinem Arbeitswalzendurchmesser benötigt. Eine wünschbare Anstellgeschwindigkeit von z.B. 50 mm/s liegt etwa bei dem 10-fachen der heute üblichen Anstellgeschwindigkeiten. Der Walzspalt wird durch von speziellen Regelungsalgorithmen ermittelten Stelldaten gesteuert. Dabei muß neben den Daten des Ausgangswerkstoffs auch die Verfestigung durch Walzen bzw. Entfestigung durch Glühen sowie Bandzugsstörungen durch Bundunrundheiten berücksichtigt werden. Das Längsprofil, die Einlauf- und die Auslaufgeschwindigkeit des Bandes müssen kontinuierlich gemessen werden.

Walzwerkssteuerungen und Anstellungen, die das o.a. Anforderungsprofil erfüllen, sind für die Herstellung eines definierten Dickenprofils in Walzrichtung bereits entwickelt und bei der Produktion von Tailor Rolled Blanks eingesetzt worden. Die Anforderungen sind im Wesentlichen die gleichen, nur die Zielsetzung ist genau umgekehrt, nämlich das Walzen eines Dickenprofils in ein Ausgangsband konstanter Dicke.

Für das Einebnen des Rohbandes werden mehrere Verfahren vorgeschlagen:
- Bei keilförmiger Anordnung und Verbindung der Kathodenbleche kann der entstandene Keil im ersten Stich von dick nach dünn oder von dünn nach dick gewalzt werden.
   Nach der ersten Verfahrensvariante wird das Rohband von dick nach dünn beginnend mit der dicksten Stelle mit abnehmendem Reduktionsgrad gewalzt. Diese dickste Stelle wird um die maximale in einem Stich erreichbare Dickenabnahme auf eine Zwischenstärke reduziert. Der Walzstich ist beendet, wenn das keilförmige Rohband bis zu der Stelle auf die Zwischenstärke reduziert worden ist, an der seine Dicke erstmals gleich der Zwischenstärke ist. Unter Berücksichtigung der Zunahme der Härte in den am stärksten reduzierten Bandteilen wird der maximale Reduktionsgrad für den nächsten Stich bestimmt. Der nächste Stich beginnt mit den bereits am stärksten reduzierten Bandabschnitten. Dieses Verfahren wird wiederholt, bis das Band (zwischen-)geglüht werden muß; danach wird der Prozeß in gleicher Weise fortgesetzt, bis das Band eine annähernd gleiche Dicke aufweist.
   Nach der zweiten Verfahrensvariante wird das Rohband von dünn nach dick mit zunehmendem Reduktionsgrad gewalzt. Zunächst wird der Walzspalt errechnet, der dazu führt, daß beim Walzen der dicksten Bandteile gerade der maximale Reduktionsgrad erreicht wird. Der Walzprozess beginnt dann an der Stelle des keilförmigen Bandes, deren Dicke identisch ist mit dem vorher errechneten Walzspalt. Die weitere Behandlung erfolgt der ersten Verfahrensvariante entsprechend.
   Beim reversierenden Walzen werden die beiden Verfahrensvarianten kombiniert, indem die Variante nach jedem Stich gewechselt wird.
- Bei Blechen, die ohne Vorsortierung miteinander verbunden werden, kann die Banddicke in mehreren Walzschritten mit jeweils engerem Walzspalt - zweckmäßigerweise durch reversierendes Walzen -egalisiert werden.
   - Die Egalisierung kann sich auf das gesamte Rohband beziehen, wobei die Walzspaltverengung zwischen zwei Stichen und die Walzgeschwindigkeit so gering sein müssen, daß beim Auftreffen eines Dickensprungs auf die den Walzspalt begrenzenden Walzen Bandreißer und Walzenbeschädigungen vermieden werden.
   - Alternativ kann, beginnend mit einer Platte, die dicker ist als ihre beiden Anschlussplatten, insbesondere beginnend mit der dicksten Platte im Band, jede Platte auf die Dicke der dicksten Anschlussplatte heruntergewalzt werden. Derart hergestellte gleichdicke Platten werden in weiteren Walzschritten als eine Platte behandelt. Um das Walzgerüst präzise steuern zu können, ist permanent das Bandprofil zu messen.

Die jeweilige Verfahrensvariante wird solange wiederholt, bis das gesamte Band eine so einheitliche Dicke aufweist, daß die vom Walzgerüst verarbeitbaren Dickentoleranzen beim Walzen mit höheren Geschwindigkeiten nicht überschritten werden. Weitere Dickenreduktionen können nun mit höheren Walzgeschwindigkeiten vorgenommen werden.

Die einzelnen Kathodenbleche werden je nach ihrer Ausgangsstärke in den ersten Walzstichen sehr unterschiedlich verformt. Dadurch entstehen Abschnitte unterschiedlicher Verfestigung. Das Walzen von Bändern, die aus Abschnitten unterschiedlicher Verfestigung bestehen, ist bisher unbekannt.

### b) Durchziehen

Die Rohbänder können auch durch Durchziehen auf eine einheitliche Dicke gebracht werden. Durch eine an der Werkzeugauslaufseite angreifende Ziehkraft wird das Material durch eine sich verengende Werkzeugöffnung gezogen. Wenn die Werkzeugöffnung durch Walzen begrenzt ist, wird das Verfahren als Walzziehen bezeichnet. Im Werkzeug wird das Material durch Zug- und Druckspannungen umgeformt.

### V. Beseitigung von Planheitsmängeln

Kathodenbleche, die aus Starter Sheets entstanden sind, sind üblicherweise wellig. Planheitsmängel können ggf. durch Walzen und Glühen oder durch Richten beseitigt werden.

### VI. Glühen

Kathodenbleche weisen eine Reihe herstellungsbedingter Nachteile auf: hohe Härte, Gas- und - je nach Herstellungverfahren - Schwefelbeladung und Oberflächenunebenheiten. Durch das Einebnen nach den vorgeschlagenen Walz- bzw. Walzziehverfahren weisen die einzelnen Blechabschnitte eine unterschiedliche Verfestigung auf. Beim Glühen von Metallen kann in den nicht ausreichend verfestigten Abschnitten Grobkornbildung einsetzen, die die weitere Verarbeitung erschwert. Das vorgeschlagene Verfahren soll auch die Grobkornbildung verhindern. Durch die Verbindung der Bleche und den unterschiedlichen Reduktionsgrad entsteht ein inhomogenes Gefüge. Durch Glühen, ggf. verbunden mit Walzen, soll ein gleichmäßiges Gefüge eingestellt werden.

Die o.a. Nachteile von Kathodenblechen im Herstellungszustand und im zum Rohband verarbeiteten Zustand können durch ein ggf. mehrstufiges Glühverfahren beseitigt werden.

### 1. Beseitigung der faserigen bzw. kolumnaren Struktur

Elektrolytisch erzeugte Metalle sind sehr feinkörnig, sie können sogar nanokristallin sein (EP 0670916). Das erklärt die hohe Härte von Kathodenblechen. Angesichts der durch ihre Härte und ggf. Sprödheit hervorgerufenen Probleme sind Kathodenbleche zur Weiterverarbeitung als Band kaum geeignet. Durch elektrolytische Deposition entsteht häufig eine faserige bzw. kolumnare Struktur im rechten Winkel zur Blechebene; sie macht eine Verformung durch Stauchen besonders schwierig. Der Fachmann wird deshalb eine Weiterverarbeitung von Kathodenblechen, die eine Verformung verlangt, ausschließen. Es wird daher vorgeschlagen, die bei der Elektrodeposition entstehende feinkörnige faserige oder kolumnare Struktur in eine nicht feinkörnige und nicht faserige/kolumnare Struktur umzuwandeln.

Elektrolytische Abscheidungen können wie stark verformte Metalle durch Glühen rekristallisiert werden; dabei hängt die Rekristallisationstextur von der Abscheidungstextur ab.

### 2. Beseitigung der Gasbeladung

Herstellungsbedingt weisen elektrolytisch hergestellte Kathodenbleche z.B. aus Kobalt, Nickel, Kupfer, Eisen, Zink und Zinn einen vergleichsweise hohen Wasserstoffgehalt auf. Wasserstoff führt zu Schweißfehlern und kann im Material Wasserstoffversprödung auslösen.

Um den Wasserstoffgehalt um mindestens 90% zu reduzieren, können die Bleche entweder über einen längeren Zeitraum moderat erhitzt werden (bei Nickel ca. 18 bis 24 Std. bei 180 - 250°C) oder sie müssen kurzzeitig bei hohen Temperaturen (bei Nickel ca. 30 min. bei 800 - 1.000°C) - vorzugsweise unter Vakuum - geglüht werden. Die Wahl des Verfahrens hängt u.a. vom Einfluß der Wärmebehandlung auf die Kristallstruktur ab.

### 3. Reduzierung des Schwefelgehaltes

Werden Metalle aus Sulfaten abgeschieden, so kann auch ein erhöhter Schwefelgehalt vorliegen. Durch Schwefel kann Korngrenzenkorrosion ausgelöst werden. Schwefel läßt sich durch Hochtemperaturglühen in Wasserstoff in H₂S und HS umwandeln und austreiben.

### 4. Beseitigung von Oberflächenunebenheiten

Oberflächenunebenheiten ("Warzen") werden durch einen oder mehrere Walzstiche eingeebnet. Die eingewalzten Warzen verbinden sich aber nicht vollständig mit dem Grundmaterial. Diese Verbindung wird durch Grobkornglühen erzielt. Das Grobkorn kann durch rekristallisierendes Glühen nach einer Mindestverformung beseitigt werden.

### 5. Rekristallisierendes Glühen

Zwischen den einzelnen Walzstichen ist das Band nach Bedarf rekristallisierend zu glühen. Die Rekristallisationstemperatur hängt von der vorausgegangenen Verformung und etwaigen Begleitelementen ab. Die Glühtemperatur, bei der eine Rekristallisation erreicht wird, ist umso höher, je kürzer die Glühzeit ist.

Beim rekristallisierenden Glühen nicht und nur gering verformter Bandabschnitte bleibt die Korngröße erhalten, da sich keine neuen Kristalle entwickeln. Erst bei einem kritischen Verformungsgrad führt rekristallisierendes Glühen zu einer Neubildung von Kristallen. Da bei dieser Verformung aber nur wenige Kristallkeime entstehen, bildet sich ein grobes Korn, das die weitere Verarbeitung beeinträchtigt. Um Grobkornbildung beim Glühen zu vermeiden, können Bandabschnitte, die über alle Walzstiche zwischen zwei Glühvorgängen insgesamt mit dem kritischen Verformungsgrad und geringfügig darüber verformt werden sollen, insgesamt einer Mindestumformung unterzogen werden, bei der kein grobes Korn mehr gebildet wird. Dabei lässt sich allerdings eine schmale Übergangszone in der Praxis kaum vermeiden. Zwischen zwei Glühvorgängen muß also nicht das ganze Band durch Walzen verformt werden. Das wäre nicht nur schwierig, wenn die Bleche nicht nach zu- oder abnehmender Dicke zu einem Band verbunden wurden, es ist auch unerwünscht, weil dann dünne Bandabschnitte noch dünner würden.

### 6. Herstellung gleicher Korngrößen im egalisierten Band

Die nach einem rekristallisierenden Glühen sich einstellende Korngröße hängt u.a. von der Korngröße vor dem Glühen ab. Vor dem Glühen weist das erfindungsgemäß hergestellte Band aufgrund von Gefügeänderungen beim Schweißen und der unterschiedlichen Verformung unterschiedliche Korngrößen auf. Die Unterschiede in den Korngrößen müssen beseitigt werden, da ansonsten das Material nicht prozeßsicher weiterverarbeitet werden kann.

Bei Metallen, die eine Phasenumwandlung zeigen (z.B. Eisen), kann eine einheitliche Korngröße durch Normalglühen (Normalisieren) erreicht werden. Durch Erhitzen und Abkühlen tritt eine zweifache Phasenumwandlung ein, die frühere Einflüsse auf das Gefüge beseitigt. Die bei der Umwandlung gebildeten Kristalle sind von der Ausgangskorngröße weitgehend unabhängig; das gilt auch für die Rückumwandlung. Durch normalisierendes Glühen entsteht ein feines gleichmäßiges Gefüge über das gesamte Band.

In Metallen, die keine Phasenumwandlung zeigen, kann eine Angleichung der Korngröße durch die Einstellung des Reduktionsgrades und die Ausgestaltung des Glühprozesses in mehreren sehr unterschiedlichen Verfahren erzeugt werden:

Die Rekristallisationskorngröße in Abhängigkeit vom Umformgrad ergibt eine hyperbelartige Kurve. Bei niedrigen Umformgraden, die eine Mindestumformung überschreiten, ergibt sich eine große Korngröße. Bei zunehmendem Umformgrad nimmt die Korngröße ab, um schließlich bei weiter zunehmenden Umformgraden nahezu konstant zu werden. Wird ein Band mit Abschnitten unterschiedlicher Verfestigung zusätzlich in einem Ausmaß verformt, daß der Gesamtreduktionsgrad der bisher am geringsten verformten Bandteile in dem Bereich der Hyperbel liegt, in dem eine Erhöhung des Umformgrades bei der nachfolgenden Rekristallisation kaum mehr zu einer Kornverfeinerung führt, so stellt sich in den insgesamt stärker verformten Bandteilen bei der Glühung zwar ein feineres Korn ein, die Abweichung der Korngrößen im gesamten Band ist aber nur noch geringfügig. Über die Wahl des Umformgrades kann daher ein Ausgleich der Korngröße erreicht werden.

Die Rekristallisationstemperatur hängt wesentlich von der vorangegangenen Verformung ab. Je stärker die Reduktion war, desto niedriger liegt die Rekristallisationstemperatur und desto feinkörniger wird das sich bildende Gefüge. Wird nach Abschluß der primären Rekristallisation der Glühvorgang fortgesetzt, beginnt eine Kornvergrößerung. Wird Band rekristallisierend geglüht, das einer unterschiedlichen Verformung ausgesetzt war, und wird die Glühtemperatur so hoch gewählt, daß auch die gering - aber über der geforderten Mindestumformung - verformten Bandteile rekristallisieren, so ist in den stark verformten Bandteilen die Rekristallisationstemperatur bereits überschritten. Dort setzt verstärktes Kornwachstum bereits zu einem Zeitpunkt ein, in dem die Rekristallisation in den weniger stark verformten Bandabschnitten noch nicht abgeschlossen ist. Da die stark verformten Bandteile nach der Rekristallisation ein feineres Korn aufweisen, als die gering verformten Bandteile, führt das Kornwachstum zu einer weitgehenden Angleichung der Korngrößen im Band. Allein über die exakte Wahl von Glühtemperatur und Glühdauer kann daher schon ein Ausgleich der Korngröße erreicht werden.

Alternativ kann zunächst im Band ein Grobkorn erzeugt werden. Danach wird das Band mit einem solchen Reduktionsgrad gewalzt, daß ein anschließendes Glühen zur Rekristallisation führt. Durch rekristallisierendes Glühen entsteht dann ein gleichmäßiges Gefüge. Eine Grobkornbildung kann erreicht werden durch
- langes Glühen bei höheren Temperaturen als für eine Rekristallisation erforderlich. Es tritt ein Kornwachstum zu Lasten der Zahl der Körner ein (Kornvergrößerung)
- starke Reduktion und Glühen bei hohen Temperaturen (sekundäre Rekristallisation). Dieses Verfahren eignet sich allerdings wegen der erforderlichen hohen Querschnittsabnahme (von ca. 80% und mehr) nur für die Herstellung von - im Vergleich zum Ausgangsmaterial - dünnen Bändern

### VII. Verwendung von Bändern aus elektrolytisch hergestellten Blechen

### 1. Verwendung für Tiefziehteile mit dünnen Wandstärken

Je dünner bei einem tiefgezogenen Teil die Wandstärke ist, umso wichtiger wird ein Ausgangsmaterial, das frei ist von insbes. nichtmetallischen Einschlüssen. Solche Einschlüsse sind z.B. Oxide, die sehr hart sind und sich bei einer Verformung des sie umgebenden Materials nicht mitverformen. In dünnem Material können daher bei der Verformung Löcher entstehen. Werden aus dem Tiefziehteil Behälter gefertigt, die unter Druck stehen, wie es z.B. bei Batteriebechern und Aerosoldosen der Fall sein kann, stellen Einschlüsse in den Wänden dieser Teile Sollbruchstellen dar.

Die Anforderungen an Eisenwerkstoffe, aus denen diese Tiefziehteile i.d.R. hergestellt werden, sind, vergegenwärtigt man sich den Herstellungsprozeß schmelzmetallurgisch erzeugten Bandes, extrem hoch; sie können weltweit prozeßsicher nur von ganz wenigen Stahlherstellern erfüllt werden. Hinsichtlich nicht-metallischer Einschlüsse lauten z.B. die Anforderungen an das Material, aus dem Batteriebecher hergestellt werden:
- weniger als 0,2 Einschlüsse pro m²
- einzelne Partikel nicht größer als 1 µm
- Einschlußanhäufungen (cluster) nicht länger als 5 µm

Für korrosionsfeste Tiefziehteile wird vielfach oberflächenveredeltes, z.B. vernickeltes, Band eingesetzt. Werden nichtmetallische Einschlüsse erst nach der Oberflächenveredelung festgestellt, bestehen für derart behandelte Bänder keine alternativen Einsatzzwecke. Da aufgrund der hohen Verarbeitungsgeschwindigkeit der Bänder mangelhafte Abschnitte nicht aussortiert werden können, kann ggf. eine ganze Charge nur noch verschrottet werden.

Kathodenbleche können praktisch einschlussfrei hergestellt werden. Das aus Kathodenblechen erzeugte Band ist deshalb in hervorragender Weise als Ausgangsmaterial für dünne Tiefziehteile geeignet.

### 2. Verwendung zur Herstellung feiner Strukturen in Flachmaterial

Bandabschnitte mit feinen und genau definierten Strukturen, insbes. in Form von Anätzungen (Reliefformätzen) und Durchätzungen (z.B. Löchern und Schlitzen) werden für viele Anwendungszwecke benötigt. Löcher und Schlitze werden z.B. eingebracht in Bleche, die als Filter und Siebe, als Schablonen beim Drucken und Belichten und in der Elektronik als Kodierscheiben, Leadframes und Schattenmasken dienen. Dabei werden hohe Anforderungen an die Ätzgeometrie gestellt. Bei durch Durchätzen hergestellten Filtern sollen Partikel einer bestimmten Größe durchgelassen, größere Partikel zurückgehalten werden. Bei Schattenmasken dienen die Löcher der Ausrichtung des Elektronenstrahls. Durch Reliefätzen können z.B. feine Kanäle in Bipolarplatten für Brennstoffzellen hergestellt werden.

Enthält das zu ätzende Band Einschlüsse, werden Einschluß und das umgebende Band mit unterschiedlichen Abtragsraten geätzt mit der Folge, daß die gewünschte Ätzgeometrie verfehlt wird.

Für die Erzeugung feiner Strukturen in Blechen und Bändern werden deshalb einschlussfreie Bänder als Ausgangsmaterial benötigt, wie sie durch das erfindungsgemäße Verfahren hergestellt werden können.

### 3. Verwendung von durch Querteilung von Bändern hergestellten Blechen als Starter Sheets

Bei der Elektrodeposition kann die Metallabscheidung auf Permanentkathoden und auf Starter Sheets erfolgen. Nach der Deposition auf Permanentkathoden muß das abgeschiedene Metall durch Strippen gelöst werden. Chrom- und Manganablagerungen sind so spröde, daß sie beim Strippen meist zerbrechen; sie werden in diesem Fall als Flakes gewonnen. Starter Sheets werden ihrerseits in einem verkürzten elektrolytischen Prozess auf Permanentkathoden erzeugt. Die größte ökonomische Bedeutung haben Starter Sheets z.Zt. bei der Herstellung von Nickel, da Kupferproduzenten vielfach auf Permanentkathoden umgestellt haben.

Die Herstellung der Starter Sheets nimmt ca. 15 - 25% der Kapazität des Tankhauses in Anspruch, die damit für die Herstellung der Endprodukte fehlt. Da die Starter Sheets im Vergleich zu den Kathodenblechen dünn sind, müssen sie manuell gestrippt werden. Bei der Herstellung von Nickel werden die Starter Sheets auf Permanentkathoden aus Titan abgeschieden. Aufgrund der hohen Kosten von Titan verursachen Titan - Permanentkathoden eine erhebliche Kapitalbindung. Die Oberfläche der Permanentkathoden muß vor dem nächsten Einsatz durch Schleifen wieder geglättet werden. Dies begrenzt die Lebensdauer der Permanentkathoden. Aus Kostengründen sollen die Starter Sheets möglichst dünn sein, andererseits sind dünne Sheets nicht ausreichend fest, so daß sie leicht wellig im Elektrolysebad hängen können und damit ebenso wellige Kathodenbleche erzeugen. Die Starter Sheets sind deshalb von einigen Unternehmen durch Hämmern verfestigt worden. Sie werden vielfach durch Falten der Enden oder durch eingeprägte Sicken versteift.

Um die Nachteile von Starter Sheets zu vermeiden, hat sich bei einigen Metallen, z.B. Kupfer, die Abscheidung auf Permanentkathoden weitgehend durchgesetzt. Bei Einsatz von Permanentkathoden müssen aber die Kathodenbleche durch Einsatz von Spezialmaschinen gestrippt werden, und die Bleche sind vor jedem Einsatz glatt zu schleifen. Das Verfahren führt zu einer hohen Kapitalbindung durch die im Umlauf befindlichen Bleche und die zum Strippen erforderlichen Maschinen und zu Aufwand in Form von Zinsen und Abschreibungen auf die Maschinen und Permanentkathoden. Falls Starter Sheets von hoher Qualität preiswert zur Verfügung stünden, wäre eine (Rück-) Umstellung auf den Einsatz von Starter Sheets auch bei Metallen vorteilhaft, die z.Zt. auf Permanentkathoden abgeschieden werden.

Starter Sheets müssen von guter Qualität sein, da sie unmittelbar die Geometrie und die Reinheit des Endproduktes bestimmen. Die Anforderungen an Starter Sheets sind entsprechend hoch:
- Reinheit der Starter Sheets
   Wenn Material hoher Reinheit erzeugt werden soll, scheidet die Verarbeitung schmelzmetallurgisch hergestellter Bleche aus
- Sauberkeit der Oberfläche
   Unsauberkeiten werden Bestandteil des Kathodenblechs
- metallisch blanke Oberfläche
   das Starter Sheet muß sich gleichmäßig mit dem abgeschiedenen Metall überziehen. Die Starter Sheets werden deshalb in der Praxis anodisch entpassiviert und bis zum Einsatz in Borwasser aufbewahrt
- Planheit
   die Bleche müssen völlig flach ("dead flat") sein, insbes. dürfen sich die Enden nicht abbiegen, da dadurch Kurzschlüsse ausgelöst werden können. Ähnliches gilt für Welligkeit und andere Planheitsfehler. Es ist häufig beobachtet worden, daß bei Raumtemperatur plane Starter Sheets sich verziehen, nachdem sie kurze Zeit einem Elektrolysebad ausgesetzt waren (US 2,578,968, Sp.1, Z. 18 ff.; US 6,153,082, Sp. 2, Z. 9 ff.), obwohl die Badtemperatur - je nach Metall - lediglich zwischen 30 und 60 °C liegt.
- Festigkeit
   Je höher die Festigkeit ist, desto dünner - und damit umso preiswerter - können grundsätzlich die eingesetzten Starter Sheets sein.

Die beobachtete Biegung im Elektrolysebad wird dadurch verursacht, daß die Bleche nicht völlig spannungsfrei sind. Starter Sheets, als elektrolytisch abgeschiedene Bleche, stehen herstellungsbedingt ohnehin unter Spannungen. Beim manuellen Abziehen der Starter Sheets von den Permanentkathoden werden die Starter Sheets gebogen; dadurch entstehen weitere Spannungen.

Bei aus gewalzten Bändern hergestellten Blechen kann eine Vielzahl von spannungsinduzierten Planheitsfehlern auftreten: Coil Set, Cross Bow, Edge Waves, Camber, Long Waves und Center Buckles. Für die Verwendung von Blechen als Starter Sheets ist ein Coil Set besonders schädlich, weil er dazu führen kann, daß sich Anode und Kathode berühren. Dadurch wird ein Kurzschluß ausgelöst. Festigkeit und Planheit sind widersprüchliche Anforderungen. Je höher die Festigkeit ist, desto größer sind potentiell auch die inneren Spannungen, die zu Planheitsfehlern führen. Da Planheit bei Verwendung der Bleche als Starter Sheet das wichtigere Kriterium ist, geht ein Kompromiß zu Lasten der Festigkeit.

Fertigungsstrategien zur Einstellung von reduzierten Festigkeitswerten sind z.B.:
- Spannungsarmglühen oder unvollständige Rekristallisationsglühung verfestigten Materials
- Rekristallisierendes Glühen mit anschließender Verfestigung
   Die gewünschte Verfestigung kann durch einen Walzstich, z.B. einen Dressierstich, erreicht werden. Durch Nachwalzen können existierende Planheitsfehler reduziert werden, aber neue innere Spannungen aufgebaut werden, die zu neuen Planheitsfehlern führen können.

Das nach beiden Fertigungsstrategien hergestellte Band ist für den beabsichtigten Verwendungszweck nicht ausreichend plan und weist noch innere Spannungen auf. Ein höherer Grad an Planheit kann im teilverfestigten Band erreicht werden durch
- Streck(biege)richten
   Streck(biege)richten kann anstelle des Nachwalzens oder zusätzlich durchgeführt werden. Kennzeichnend für das Streck(biege)richten ist eine plastische Verformung, durch die innere Spannungen abgebaut werden
- Spannungsarmglühen
   Innere Spannungen, die über die Streckgrenze hinaus gehen, werden von selbst durch plastische Verformung abgebaut. Unter der Streckgrenze liegende innere Spannungen können durch Spannungsarmglühen reduziert, aber nicht vollständig abgebaut werden. Da die Streckgrenze mit zunehmender Temperatur sinkt, sind möglichst hohe - aber unter der Rekristallisierungstemperatur liegende - Glühtemperaturen empfehlenswert, um Spannungen möglichst weitgehend abzubauen. Spannungsarmglühen ist **dadurch gekennzeichnet, daß** die Verfestigung weitgehend erhalten bleibt.

Streck(biege)richten und Spannungsarmglühen können sequentiell, aber auch gleichzeitig (tension annealing) geschehen. Beim tension annealing wird das Material erhitzt, und dabei wird Zug ausgeübt.

Alle Anforderungen an Starter Sheets können durch Bleche, die aus den erfindungsgemäß hergestellten Bändern durch Querteilung gewonnen werden, erfüllt werden: Die Bleche sind von mindestens der gleichen Reinheit wie das auf ihnen abzuscheidende Metall. Die Reinheit ist mindestens so hoch, da die Gehalte an Schwefel, Kohlenstoff und Wasserstoff durch Glühen (z.B. im OC-Verfahren oder durch Einsatz von Durchlaufglühen) gegenüber den Gehalten dieser Verunreinigungen in Kathodenblechen ganz wesentlich (> 90%) reduziert werden können. Rauheit und Festigkeit können durch Nachwalzen präzise eingestellt werden. Durch Streck(biege)richten der Bänder können völlig plane Bleche ("dead flat") erzeugt werden. Durch Spannungsarmglühen der Bänder können weitgehend spannungsfreie Bleche erzeugt werden.

An die dergestalt hergestellten Bleche müssen vor ihrem Einsatz lediglich noch Ösen angeschweißt werden, mit denen sie in das Elektrolytbad gehängt werden können.

### 4. Verwendung von Folien aus elektrolytisch hergestellten Blechen als Substrat für Supraleiter

Es ist bekannt, daß in kubisch - flächenzentrierten Metallen und Legierungen, z.B. in Kupfer, Nickel und Eisen - Nickel - Legierungen durch sehr starke Reduktion mit anschließendem Glühen eine Würfellage erzeugt werden kann. Für die Erzeugung einer Würfellage ist hochreines Material Voraussetzung, ein feinkörniges Ausgangsgefüge vor der letzten Kaltwalzung vorteilhaft.

In Nickel läßt sich eine Würfellage durch Walzen mit einem Reduktiongrad von ≥ 90% mit anschließendem Glühen bei 800 bis 1.000°C erzeugen. Da bereits geringe Verunreinigungen insbesondere mit Co und Al die Ausbildung einer Würfellage verhindern, Co bei der Elektrodeposition aber mit abgeschieden wird, wird zur Erzeugung einer Würfellage in Nickel üblicherweise Carbonylnickel verwandt. Es ist aber möglich, kobaltfreie Nickelkathoden herzustellen, indem Kobalt aus dem Elektrolyt ausgefällt oder durch Solventextraktion entfernt wird.

Folien aus elektrolytisch hergestelltem und in erfindungsgemäßer Weise verarbeitetem Material sind wegen ihrer hohen Reinheit in besonderem Maße zur Erzeugung einer scharfen Würfellage geeignet.

Solche Folien können als Substrate für Supraleiter eingesetzt werden.

### 5. Ultra Low Carbon Metals (ULCM)

Kohlenstoff führt z.B. in Nickel bei längerer Erhitzung im Bereich von 425 - 650°C zu Graphitausscheidungen, die die Duktilität beeinträchtigen. Elektrolytisch erzeugtes Nickel ist praktisch frei von Kohlenstoff; der Kohlenstoffgehalt beträgt nur max. 0,0002%. Durch eine Glühung in Wasserstoff kann der Kohlenstoffgehalt noch weiter bis unter die Nachweisgrenze reduziert werden.

Schmelzmetallurgisch läßt sich kohlenstoffarmes Nickel (Norm: ≤0,02% C) nur durch besonders aufwendige Verfahren herstellen (LC Nickel, Nickel 201). Der C-Gehalt von elektrolytisch hergestelltem Nickel liegt damit um mindestens 99% unter der Norm für LC-Nickel.

Ähnliches gilt für andere Metalle, z.B. Eisen.

### 6. Verwendung des Metallbandes nach gezielter Versetzung mit Beimengungen

Die Oberfläche des erzeugten Metallbandes kann durch PVD, CVD, ECD, Galvanisieren, Feuerbeschichten, Spritzen, Plattieren und andere Verfahren beschichtet werden. Durch Diffusion kann das Schichtmaterial im Metallkörper verteilt werden. Das erzeugte Metallband kann auch gezielt durch Carburieren, Nitrieren, Borieren und andere Verfahren mit Beimengungen versehen werden, die ggf. durch Diffusion gleichmäßiger im Metallkörper verteilt werden können. Auf diese Weise kann z.B. durch Aufkohlen eines Eisenbandes Stahl erzeugt werden.

### 7. Verwendung des Bandes für Batterieanschlüsse (insbes. Zellenverbinder, electric leads und Polkontaktplatten) und Batterieteile (insbesondere Anschlusspole)

Die Teile, die eine Batterie mit dem gespeisten Gerät (batterieseitig: Anschlusspole und electric leads, geräteseitig: Polkontaktplatten) und die Batterien untereinander (Zellenverbinder) verbinden, müssen eine hohe elektrische Leitfähigkeit aufweisen. Sie sollen außerdem einen hohen Reinheitsgrad haben, insbesondere frei sein von nichtmetallischen Einschlüssen, um die Schweißbarkeit zu verbessern, und nur geringe Oberflächenoxide aufweisen, damit der geringen Kontaktwiderstand gering ist, Werkzeugverschleiß vermieden und die Lötbarkeit verbessert wird.

Diese Anforderungen werden z.T. durch erfindungsgemäß hergestelltes Nickel-, z.T. durch erfindungsgemäß hergestelltes Kupferband in besonderem Maße erfüllt.

### E. Erreichte Vorteile

Die Vorteile des beschriebenen Verfahrens sind sowohl technischer als auch wirtschaftlicher Art; das Verfahren trägt auch zum Umweltschutz bei.

Die *technischen Vorteile* liegen vor allem darin, daß die hohe Reinheit und Einschlußfreiheit der Kathodenbleche bei der Weiterverarbeitung erhalten bleiben. Außerdem ist - anders als bei schmelzmetallurgischer Herstellung - die Oberfläche nur in geringem Maße oxidiert.

Die *wirtschaftlichen Vorteile* liegen darin, daß die bei schmelzmetallurgischer Erzeugung von Band besonders energie- und kapitalintensiven Verarbeitungsschritte entfallen und durch einen nach dem erfindungsgemäßen Verfahren gestalteten Wärmebehandlungs-, Verbindungs- und Walzvorgang ersetzt werden. Außerdem ist der Schrottanfall bei dem beschriebenen Verfahren wirtschaftlich nahezu unbeachtlich, da der entstehende Schrott einen hohen Reinheitsgrad hat. Das gilt für die bei schmelzmetallurgischer Erzeugung entstehenden Abfälle nicht: Der beim ESR-Verfahren entstehende Kopfschrott enthält die dem Rest des Blocks entzogenen Unreinheiten, die Schleifabfälle sind oxidreich und mit den Rückständen der Schleifmittel durchsetzt, beim Beizen geht das Material in Lösung.

Die Umwelt wird dadurch entlastet, daß das beschriebene Verfahren weniger energieintensiv ist als die vorherrschende Schmelzmetallurgie und daß der Anfall der bei letzterer entstehenden Gase, Schlacken und Zunder vermieden wird.

### F. Beschreibung eines Beispiels der Erfindung: Herstellung von Nickelband aus Kathodenblechen

Von den an der LME gehandelten Metallen werden nur Kupfer und Nickel als Kathodenbleche angeboten. Die beispielhaft ausgeführte Darstellung der Erfindung beschränkt sich auf Nickel. Nach ersten Berechnungen liegt die Reduzierung der Verarbeitungskosten bei der Herstellung von Nickelband gegenüber schmelzmetallurgischer Erzeugung in der Größenordnung von € 2.500 pro Tonne; das sind ca. 65 % der Verarbeitungskosten.

Für die Versuche wurden russische Nickelkathodenbleche eingesetzt, da diese Bleche wegen ihres niedrigen Wasserstoff- und Schwefelgehaltes auch ohne eine Wärmevorbehandlung geschweißt und gecoilt werden konnten. Die Bleche sind - wie die mikroskopische Untersuchung zeigt - durch Abscheidung auf einem Starter Sheet entstanden. Aufgrund der Verwendung von Starter Sheets sind die Bleche nicht plan. Die Längenabweichungen betragen bis zu +/- 30mm und die Breitenabweichungen bis zu +/- 55 mm bei Sollabmessungen des Kathodenblechs von L 1005mm x Br 855 mm. Die Dicken verschiedener Bleche liegen zwischen 4 und 6 mm, geringe Dickenunterschiede gibt es auch innerhalb eines Blechs. Die Stärke der Bleche fällt an den Rändern bis auf 1mm ab; die Randbereiche haben daher kein rechtwinkeliges Profil. Die Oberfläche der Bleche ist übersät von tropfenförmigen Ausbuchungen. Die Härte des Grundmaterials der Bleche beträgt 46 - 49 HRC, die Härte der Ausbuchtungen 42 - 45 HRC.

### I. Struktur elektrolytisch erzeugten Nickels

Nickel hat vom absoluten Nullpunkt bis zur Schmelztemperatur ein kubischflächenzentriertes Gitter. Aufgrund der Gitterstruktur ist Nickel grundsätzlich stark verformbar.

Elektrolytisch erzeugtes Nickel weist aber eine feinkörnige und - je nach Herstellung - eine faserige bzw. kolumnare Struktur senkrecht zur Kathodenebene auf. Es verhält sich bei der Verarbeitung wie stark verformtes Nickel, ist also nur schwierig weiterzuverarbeiten. Um die Verarbeitung zu erleichtern, können die Nickelbleche rekristallisierend unter nicht oxidierender Atmosphäre geglüht werden.

### II. Chemische Analyse elektrolytisch erzeugten Nickels und Folgen für die Verarbeitung

### 1. Chemische Zusammensetzung

Das Material weist folgende chemische Zusammensetzung auf:

**Ausgewählte Elemente der chemischen Zusammensetzung von Nickelkathoden**

| | **Ni** | **Co** | **H** | **C** | **S** | **Mn** | **Mg** |
|---|---|---|---|---|---|---|---|
| Herstellerangabe (Ni+Co min, sonst max.) | 99,95 | 0,1 | k.A. | k.A. | 0,001 | k.A. | 0,001 |
| | | | | | | | |
| EDX-Analyse 1 | 99,93 | 0,057 | k.A. | <0,0002 | 0,0011 | <0,0004 | k.A. |
| | | | | | | | |
| EDX-Analyse 2 | 99,94 | 0,048 | k.A. | <0,0002 | 0,0002 | <0,0004 | k.A. |

| | | | | | | | |
|---|---|---|---|---|---|---|---|
| Alle Gehalte in Gewichts-%; k.A.: keine Angabe | | | | | | | |

### 2. Schwefelgehalt

Die Analysen der chemischen Zusammensetzung von Kathodenblechen aus Nickel zeigen, daß der Schwefelgehalt sehr gering (< 2 ppm) sein kann und deutlich geringer ist als bei schmelzmetallurgischer Erzeugung von Nickel. Russisches Kathodenmaterial hat einen _ Schwefelgehalt von bis zu 10 ppm; in dieser Höhe liegt auch der Magnesiumgehalt.

Nickel ist anfällig für durch Schwefel, Zinn, Zink und Wismut hervorgerufene Korngrenzenkorrosion. Zum Beispiel verbindet sich nicht im Nickel gelöster Schwefel bei über 400°C mit Nickel zu Nickelsulfid (Ni₃S₂); die Schmelztemperatur des Eutektikums von Nickel und Schwefel liegt bei 643°C. Die niedrigschmelzenden Ni-S Verbindungen breiten sich entlang der Korngrenzen aus und schwächen den Zusammenhalt der Körner. Korngrenzenkorrosion führt beim Schweißen zu Rißbildung, beim Warmumformen zu Heißrissen (Rotbruch; high temperature embrittlement) und beim Kaltumformen zu Kaltsprödigkeit (Oberflächenrissen). Rotbrüchigkeit wird durch Schwefelgehalte ab 2 ppm ausgelöst, Kaltsprödigkeit bei höheren Schwefelgehalten.

Der geringe Schwefelgehalt von Nickelkathoden ist gleichwohl gefährlicher als der höhere Gehalt bei schmelzmetallurgischer Erzeugung. Das liegt daran, daß schmelzmetallurgisch erzeugtem Nickel in ausreichendem Maße Legierungselemente wie z.B. Mangan, Magnesium, Niob, Titan und Aluminium beigegeben werden, die Schwefel abbinden sollen. Diese Unreinheiten liegen bei elektrolytisch erzeugtem Nickel nicht (Mangan) bzw. nicht in ausreichendem Maße (Magnesium) vor.

Der Schwefelgehalt muß daher ggf. durch Glühen der Nickelbleche in Wasserstoff unter Bildung von H₂S und HS entfernt werden.

Um das Biegen des Bandes auf einen Haspel zu simulieren, sind an ungeglühten, geschweißten Kathodenblechen Biegeversuche mit einem Durchmesser von 508 mm durchgeführt worden. Dabei haben sich an der Biegestelle keine Oberflächenrisse gezeigt. Erst bei einer Biegung der Probe um 100° traten in der - unbehandelten - Wärmeeinflusszone, nicht in der Schweißnaht, schuppige Oberflächenrisse auf. Auf ein entschwefelndes Glühen des Bandes vor dem Schweißen bzw. Walzen wurde daraufhin verzichtet.

### 3. Wasserstoffgehalt

Der Wasserstoffgehalt von elektrolytisch hergestelltem Nickel kann durch naßchemische Methoden nicht bestimmt werden; er wird deshalb meist nicht angegeben, liegt aber deutlich höher als bei schmelzmetallurgischer Erzeugung von Nickel. Bei der Elektrolyse wird Wasserstoff mit abgeschieden und in das Metall eingebaut. Es können sich auch Hydroxide bilden, die gleichfalls in das Metall eingebaut werden können. Die für "cut cathodes" angegebenen Wasserstoffgehalte lassen z.T. keine Rückschlüsse auf den Wasserstoffgehalt von Kathodenblechen zu, da die aus längs- und quergeteilten Blechen sich ergebenden "Squares" von einigen Herstellern vor der Auslieferung geglüht werden.

Bei Sättigung des Gitters mit Wasserstoff verhält sich Nickel so, als stünde es unter extrem hohem Druck. Die Wasserstoffatome dehnen das Metallgitter aus. Nickel kann dadurch sehr hart und rissanfällig werden. An der Oberfläche können sich Ausblühungen zeigen. Wasserstoff kann auch in Mikroporen eingelagert werden, in denen sich bei Sättigung des Gitters ein hoher Druck herrscht.

Der Wasserstoffgehalt kann und muß ggf. durch Erwärmen (vorzugsweise im Vakuum) beseitigt werden.

Schweißversuche sind an geglühten und ungeglühten Blechen vorgenommen worden. Durch WIG-Schweißen konnte das Probematerial auch in nicht geglühtem Zustand durch geschlossene porenfreie Schweißnähte verbunden werden. Auf ein Glühen zur Beseitigung von Wasserstoff konnte beim WIG-Schweißen daher verzichtet werden. Beim Elektronenstrahlschweißen von ungeglühten Blechen traten dagegen zunächst unerklärliche Abrisse der Dampfkapillare auch beim Schweißen von Probeblechen unter Vakuum auf, zurückzuführen vermutlich auf starke lokale Wasserstoffkonzentrationen. Bei geglühten Blechen waren diese Abrisse nicht zu beobachten. Die gleichen Ergebnisse traten beim Laserstrahlschweißen auf, auch bei einer auf die Unterraupe gerichteten Schutzgasspülung.

### III. Prozeßschritte

### 1. Richten

Die verwendeten Bleche waren unter Verwendung von Starter Sheets hergestellt worden. Sie sind deshalb vor dem Besäumen gerichtet worden.

### 2. Besäumen

Die Kathodenbleche werden entweder an allen Kanten besäumt oder nur an den Kanten, die durch Schweißen verbunden werden sollen.

Es ist nicht erforderlich, den in der Dicke nicht maßhaltigen Kantenbereich abzutrennen; die Kantenverdünnung erlaubt vielmehr das WIG-Schweißen ohne Verwendung von Schweißstäben aus den reinen Metallen, andererseits wird aber die maximal erreichbare Banddicke reduziert und das Walzen erschwert.

Das Besäumen der Blechkanten führt zu einer Verfestigung der Schnittstellen, die sich negativ auf die Qualität der Schweißnähte auswirken kann. Für das Schweißen von Nickel soll spannungsarm- oder weichgeglühtes Material vorliegen. Das Besäumen sollte daher als Prozeßschritt ggf. vor dem Glühen vorgenommen werden. Das Versuchsmaterial ist an den späteren Längsseiten besäumt worden, um eine einheitliche Bandbreite herzustellen, zusätzlich auch an den Querseiten, um gerade Kanten zu erzielen, mit denen der beim Elektronenstrahl- und Laserschweißen zwischen den Blechen maximal zulässige Spalt von 0,15 mm sichergestellt werden kann. Beim WIG-Schweißen war die Qualität der Schweißnähte auch bei ungeglühtem Material ausreichend.

Der bei diesen Prozeßschritten anfallende Schrott ist von der gleichen Reinheit wie das Ausgangsmaterial und läßt sich den gleichen Verwendungszwecken zuführen wie geschnittene Kathoden. Der Anfall von Schrott in den beschriebenen Prozeßstufen ist daher wirtschaftlich unbeachtlich.

### 3. Glühen _

Glühen hat folgende Zwecke:
- Rekristallisieren der feinkörnigen kolumnaren oder faserigen Struktur der Bleche
- Entfestigung der Kanten nach dem Besäumen
- Reduzieren des Schwefel-, Wasserstoff- und Kohlenstoffgehalts

Durch Vakuumglühen bei 1.000°C über 4 Stunden kann die faserige oder kolumnare feinkörnige Struktur von elektrolytischem Nickel in eine körnige Struktur geändert werden, ohne daß zuvor das Material verformt werden müsste. Beim Weichglühen steigt die Korngröße mit zunehmender Temperatur schnell an. Die Entwicklung eines groben Korns führt zu Oberflächenrauheit. Bei Weichglühtemperaturen sind Nickelbleche anfällig für Bandkleber. Besteht die Gefahr von Bandklebern, z.B. weil Bleche gestapelt werden oder Band unter hohem Rückzug aufgecoilt wird, sollte die Glühtemperatur nicht mehr als 900°C betragen.

Um den in den Blechen enthaltenen Wasserstoff auszutreiben, ist eine Glühung im Vakuum zweckmäßig. Wasserstoff kann aus den Nickelkathoden durch Vakuumglühen bei 700°C bis 800°C in vier Stunden beseitigt werden.

Die Ofenatmosphäre soll neutral bis leicht reduzierend sein, auf keinen Fall oxidierend, da die entstehenden Oxide sehr fest haften. Durch Glühen in trockenem Wasserstoff bleibt die Oberfläche zunderfrei.

### 4. Schweißen

Die zu schweißenden Stellen sollten frei von Zunder und Fetten sein; deshalb ist der Schweißnahtbereich (ca. 25 mm) metallisch blank gebürstet worden.

Phasenumwandlungen treten beim Erwärmen und Abkühlen nicht ein. Da Schweißverfahren hoher Energiedichte gewählt worden sind, entsteht nur eine schmale Wärmeeinflusszone, auf die auch die entstehenden Gefügeänderungen begrenzt sind. Eine Nachbehandlung der Wärmeeinflusszone zur Erzielung einer gleichmäßigen Weichheit hat sich entgegen der in der Patentliteratur (DE 2905508, Anspruch 3, u. S. 3, Z. 23 ff.) erhobenen Forderung für die nachfolgende Bearbeitung als nicht erforderlich erwiesen, da das geschweißte Material ausreichend biegbar war, um sich haspeln zu lassen. Eine auschließlich thermische Gefügebehandlung wäre bei Nickel als einem einphasigen Werkstoff zur Beseitigung des beim Schweißen in der Wärmeeinflusszone entstehenden Grobkorns auch nicht geeignet.

Um die Herstellung des Bandes zu beschleunigen, können mehrere Platten gleichzeitig geschweißt werden. Das so entstandene Rohband kann ggf. noch besäumt werden.

### a) Anforderungen an das Schweißverfahren

Die Anforderungen an das Schweißverfahren sind oben (unter D. I.) dargestellt worden.

### (a) Porenfreie Schweißnähte

Um Porenbildung in der Schweißnaht zu vermeiden, darf das Schweißbad nicht mit Luft in Berührung kommen.

Nickel reagiert unterschiedlich stark auf verschiedene Gase; Porenbildung beginnt bei folgenden Gehalten in der Schweißatmosphäre:

| **Gas** | **Kritischer Gehalt in %** |
|---|---|
| Stickstoff | 0,5 |
| Sauerstoff | 5 |
| Kohlenmonoxid | 5 |

Wasserstoffgehalte von etwa 10% im Schutzgas und die Verwendung von Helium als Schutzgas vermindern die Porenanfälligkeit. Wasserstoff im Schutzgas erhöht aber die Rißneigung.

Die WIG-Versuchsschweißungen sind mit reinem Argon, die Laserschweißungen mit Helium als Schutzgas durchgeführt worden. Eine Schutzgasspülung der Wurzelraupe ist nur beim Laserschweißen vorgenommen worden. Bei den WIG-Schweißungen waren die Nähte trotz Verzichts auf eine Schutzgasspülung der Wurzelraupe loch- und porenfrei.

Elektrolytisch hergestelltes Nickel enthält Wasserstoff. Bei steigender Temperatur sinkt das Haltevermögen für den im Metall in Mikroporen eingelagerten Wasserstoff. Die Erhitzung des Metalls beim Schweißen führt daher dazu, daß das Material ausgast und die Schweißnaht zum "Kochen" bringen kann. In der Schweißnaht entstehen dann Löcher, die verhindern, daß eine geschlossene Schweißnaht entsteht. Bei der Weiterverarbeitung unter Zug könnte das Material deshalb an den Schweißnähten reißen. Die in der Schweißnaht entstandenen Löcher werden bei der Weiterverarbeitung auch nicht wieder geschlossen. Der in den Blechen enthaltene Wasserstoff wird deshalb zweckmäßigerweise durch Erwärmen (vorzugsweise im Vakuum) ausgegast (sh. F. III. 3). Beim WIG-Schweißen hat sich der Wasserstoffgehalt bzw. die lokale Konzentration des Wasserstoffs als unproblematisch herausgestellt. Deshalb konnte bei den nach diesem Verfahren geschweißten Probeblechen auf ein vorheriges entgasendes Glühen verzichtet werden.

### (b) Reinheitsgrad bei Verwendung von Schweißzusatzwerkstoffen

Schweißzusatzwerkstoffen haben u.a. die folgenden Funktionen: Die im Schweißbad gelösten Gase können durch desoxidationsfördernde bzw. gasabbindende Legierungszusätze in den Schweißzusatzwerkstoffen, wie Titan, Aluminium, Mangan und Silizium, abgebunden werden; dadurch wird die Porenbildung verhindert. Nickel hat - wie jedes reine Metall - keinen ausgedehnten Schmelzbereich, sondern einen Schmelzpunkt (1.453°C). Bei Erreichen des Schmelzpunktes wird Nickel schlagartig flüssig und es besteht die Gefahr, daß die flüssige Schmelze "versackt". Um die Schmelze zu kühlen, werden gern Schweißzusatzwerkstoffe eingesetzt.

Im vorliegenden Fall ist allerdings die Verwendung von Schweißzusatzwerkstoffen unerwünscht, weil durch deren Verwendung der Reinheitsgrad des Nickels beeinträchtigt wird. Ausgenommen sind Reinnickelelektroden mit abgesenktem Wasserstoffgehalt. Solche Reinnickelelektroden sind beim WIG-Schweißen eingesetzt worden. Ein Wurzeldurchhang konnte dadurch vermieden werden.

### (c) Verbinden von Blechen, insbes. von Blechen unterschiedlicher Dicke

Aufgrund der Rechteckform der Bleche und der Tatsache, daß elektrolytisch erzeugte Bleche keine Warmwalztextur aufweisen, kann sowohl die Blechbreite als auch die Blechlänge die zukünftige Bandbreite werden.

Um ein Versacken der Schmelze beim Schweißen von Nickel zu vermeiden, wird grundsätzlich empfohlen, die Energiezuführung auf das zum Schmelzen erforderliche Maß zu begrenzen. Das ist bei den Versuchen ignoriert worden, um eine dünnflüssige Schmelze und damit porenfreie Schweißnähte zu erhalten. Damit Kapillarkräfte noch wirksam bleiben, ist die Schmelzzone durch Kühlen mit Schmelzzusatzstoffen aus Reinnickel klein gehalten worden. Zwischen den zu verbindenden Blechen ist nur ein schmaler Spalt belassen worden. Er ist wegen der gewählten hohen Schmelztemperatur enger gewählt worden, als für das WIG-Schweißen üblicherweise empfohlen.

Es müssen Bleche unterschiedlicher Dicke verbunden werden können. Beim WIG-Schweißen wird die Anarbeitung der Blechenden in Form einer V-Naht (70°) mit einer 0,5 bis 3mm starken senkrechten Wurzel empfohlen; die Spaltöffnung zwischen den Blechen kann 2 - 3 mm betragen. Abweichend von dieser Empfehlung sind die Bleche zum Schweißen mit einer 60° Schräge ohne senkrechte Wurzel vorbereitet worden. Der Wurzelspalt ist auf 1 - 2 mm begrenzt worden. Beim Elektronenstrahl- und Laserschweißen war eine weitere Anarbeitung besäumter Blechkanten nicht erforderlich; die Spaltöffnung zwischen den Blechen hat ca. 0,15 mm nicht überstiegen.

Um Verzug zu vermindern,
- kann durch Kupferunterlagen in der Nähe der Schweißzone Wärme abgeführt werden
- sollen die Bleche eingespannt werden und in der Einspannvorrichtung abkühlen.

Auf die Kupferunterlage ist verzichtet worden, um ein langsames Erstarren der Schmelze, das die Entstehung porenfreier Schweißnähte begünstigt, zu fördern.

### (d) Zugfestigkeit und Dehnbarkeit der Schweißnähte

Damit die geschweißten Bleche aufgecoilt und unter hohen Zügen gewalzt werden können, muß der Schweißnahtbereich dehnbar und zugfest sein.

Die Zugfestigkeit von elektrolytisch hergestelltem, ungeglühtem Nickel mit durch WIG-Schweißen hergestellten Schweißnähten (265 MPa) lag unter der Untergrenze des Wertespektrums für rekristallisierend geglühtes schmelzmetallurgisch hergestelltes Reinnickel (380 MPa) lag. Diese Zugfestigkeit hat sich für die geplanten Verarbeitungsschritte als ausreichend erwiesen. Auch die Dehnbarkeit war groß genug.

### b) Auswahl geeigneter Verfahren

Die Nickelbleche sollten mit mantellosen Elektroden aus reinem Nickeldraht oder ohne Schweißzusätze geschweißt werden.

Für die Versuche sind deshalb WIG-, Laser-, und Elektronenstrahlschweißen eingesetzt worden. Bei ungeglühten Blechen reagieren Laser- und Elektronenstrahlschweißen allerdings mit Abriß der Dampfkapillare auf Gehalte bzw. Konzentrationsverteilungen von im Grundwerkstoff gelöstem oder in Mikroporen eingeschlossenem Wasserstoff, die für das WIG-Schweißen noch unproblematisch sind.

Die für die Walzversuche eingesetzten Bleche sind durch WIG-Schweißen verbunden worden. Geschweißt wurde unter Verwendung einer Reinnickelelektrode mit einer Stromstärke von 160 A und 14 V.

### 5. Walzen

Ein Warmwalzen zur ersten Dickenangleichung war nicht notwendig, da die Bleche dünn genug waren, um ausschließlich durch Kaltwalzen reduziert werden zu können.

Die Walzversuche sind an 200 mm breiten, aus ganzen Kathodenblechen geschnittenen und ohne Sortierung nach Dicke verbundenen geglühten und ungeglühten Blechen vorgenommen worden. Oberflächenunebenheiten ("Warzen") wurden durch einen oder mehrere Walzstiche eingeebnet. Die eingewalzten Warzen verbinden sich aber nicht vollständig mit dem Grundmaterial. Diese Verbindung wurde durch Grobkornglühen erzielt. Dazu wird das Material im Vakuum bei 55 bis 80% des Schmelzpunktes geglüht. Da Nickel beim Glühen keine Phasenumwandlungen zeigt, kann das Grobkorn nur durch Verformung und anschließende Rekristallisationsglühung beseitigt werden.

Haspel an modernen Kaltwalzgerüsten haben einen maximalen Haspelzug von etwa 150 kN. Sie üben also bei einer Bandbreite von 1.000 mm einen Zug von 150 N/mm Bandbreite aus. Die Zugfestigkeit von Proben, in denen eine Schweißnaht lag, betrug durchschnittlich 250 N/mm². Das Nickelband kann daher an den zur Produktion eingesetzten Gerüsten in den Stichen, die der Dickenangleichung dienen, mit vollen Haspelzügen gewalzt werden.

Nickel läßt sich gut kaltverformen; Umformgrade bis zu 90% sind ohne Zwischenglühung möglich.

Die Walzversuche wurden an einem Quarto-Walzgerüst durchgeführt. Das Gerüst hat eine maximalen Walzkraft von 1,2 MN, einen Arbeitswalzendurchmesser von 135 mm und Haspelzüge von je max. 50 kN. Die maximale Bandbreite beträgt 200 mm. Das Gerüst ist mit Dicken-, Haspelzug- und Bandgeschwindigkeitsmeßgeräten und einer schnell ansprechenden Anstellung ausgestattet. Das Dickenprofil des Bandes wird fortlaufend im Abstand von ≤ 1 mm mit einem Laser-Banddickenmeßgerät erfaßt. Die Steuerung des Gerüstes ist für das Walzen von Tailor Rolled Blanks entwickelt worden. Mit der integrierten schnellen und dynamischen Walzspaltregelung konnte eine Dickenangleichung bei Walzgeschwindigkeiten von bis zu 30 m/min. durchgeführt werden.

Beim Walzen - gleich nach welchem der vorgeschlagenen Verfahren - werden die dicksten Blechabschnitte am stärksten reduziert. Dadurch kommt es im Band zu Abschnitten mit unterschiedlicher Verfestigung. Um beim Glühen Grobkornbildung zu vermeiden, wurden die Bandabschnitte, die zwischen zwei Glühvorgängen überhaupt gewalzt wurden, insgesamt mit einem Mindestgrad verformt. Der Verformungsgrad vor dem Glühen beeinflußt auch die Verformbarkeit nach dem Glühen. Bei Nickel ist eine Umformung von mindestens 20% erforderlich, um die ursprüngliche Duktilität nach dem Glühen wieder zu erreichen.

Eine Annäherung der unterschiedlichen Korngrößen wurde durch Glühen erreicht, nachdem ein Band einheitlicher Dicke hergestellt war. Die weitere Reduktion des Bandes verbunden mit Zwischenglühungen führt dann zu einer weitgehend einheitlichen Korngröße.

## Patentansprüche

1. Verfahren zur Herstellung von Metallbändern aus durch wässrige Elektrolyse zumindest eines Metalls gewonnenen Kathodenblechen, die an ihren Längs- und/oder Breitseiten durch Schmelzschweißen mit Intensitäten von 10³ bis 10⁵ W/cm² verbunden werden, **dadurch gekennzeichnet, daß** Kathodenbleche, die untereinander oder innerhalb eines Bleches Dickenabweichungen aufweisen, derart verbunden werden, daß die Platten bezüglich ihrer Dicke in ansteigender oder abfallender Folge angeordnet sind oder in einer Reihenfolge verbunden werden, die sich **dadurch** ergibt, daß das Dickenintervall zwischen der dicksten und der dünnsten Platte in Teilintervalle zerlegt wird, die Platten nach ihrer Dicke den Teilintervallen zugeordnet werden und dann die Platten eines Teilintervalls geringerer Dicke vor den Platten eines Teilintervalls größerer Dicke angeordnet werden, wonach das Einebnen eines so gebildeten Rohbandes durch Walzen erfolgt.

2. Verfahren zur Herstellung von Metallbändern aus durch wässrige Elektrolyse zumindest eines Metalls gewonnenen Kathodenblechen, die an ihren Längs- und/oder Breitseiten durch Schmelzschweißen mit Intensitäten von 10³ bis 10⁵ W/cm² verbunden werden, **dadurch gekennzeichnet, daß** Kathodenbleche, die auf untereinander gleiche Längen- und Breitenabmessungen gebracht worden sind, derart verbunden werden, daß die Platten ihrem Gewicht nach in ansteigender oder abfallender Folge angeordnet sind oder in einer Reihenfolge verbunden werden, die sich **dadurch** ergibt, daß das Gewichtsintervall zwischen der leichtesten und der schwersten Platte in Teilintervalle zerlegt wird, die Platten nach ihrem Gewicht den Teilintervallen zugeordnet werden und dann die Platten eines Teilintervalls geringeren Gewichts vor den Platten eines Teilintervalls größeren Gewichts angeordnet werden, wonach das Einebnen eines so gebildeten Rohbandes durch Walzen erfolgt.

3. Verfahren nach einem der vorherigen Ansprüche 1 oder 2, **dadurch gekennzeichnet, daß** zur Einengung von Dickenabweichungen in einem keilförmigen Rohband von dick nach dünn mit abnehmendem Reduktionsgrad gewalzt wird.

4. Verfahren nach einem der vorherigen Ansprüche 1 oder 2, **dadurch gekennzeichnet, daß** zur Einengung von Dickenabweichungen in einem keilförmigen Rohband von dünn nach dick mit zunehmendem Reduktionsgrad gewalzt wird, wobei das Walzen an der Stelle begonnen wird, an der die Keildicke der in diesem Stich zu erreichenden Zwischenstärke entspricht und beendet wird, wenn das Bandende erreicht ist.

5. Verfahren nach einem der vorherigen Ansprüche, **dadurch gekennzeichnet, daß** ein Rohband in einem oder in mehreren, insbesondere reversierenden Walzschritten mit einem jeweils engeren Walzspalt egalisiert wird.

6. Verfahren nach einem der vorherigen Ansprüche, **dadurch gekennzeichnet, daß** die durch das Verbinden der Bleche und/oder die Dickenangleichung entstehenden unterschiedlichen Korngrößen vereinheitlicht werden im Fall von Metallen, die eine Phasenumwandlung aufweisen, durch normalisierendes Glühen, und im Fall von Metallen, die keine Phasenumwandlung aufweisen, durch weitere Reduktion mit anschließendem rekristallisierendem Glühen, Glühen mit einer Glühtemperatur und Glühdauer, die auch zu einer Rekristallisation der am wenigsten verformten Bandabschnitte führen, wobei das gesamte Band seit der letzten Glühung mit einem dermaßen über dem kritischen Umformgrad liegenden Reduktionsgrad verformt worden sein muss, daß kein Grobkorn auftritt, oder durch rekristallisierendes Glühen nach Glühen auf grobes Korn und anschließender Verformung.

7. Verfahren nach einem der vorherigen Ansprüche, **dadurch gekennzeichnet, daß** beginnend mit den relativ oder absolut dicksten Platten in einem Rohband jede einzelne Platte zumindest annähernd auf die Dicke der dicksten Anschlussplatte heruntergewalzt wird, wobei dies so lange fortgesetzt wird, bis das gesamte Band eine zumindest weitgehend einheitliche Dicke hat.

8. Verfahren nach einem der vorherigen Ansprüche 3 bis 7, **dadurch gekennzeichnet, daß** für den nächsten Walzstich unter Berücksichtigung der Zunahme der Härte in den am stärksten reduzierten Bandteilen ein maximaler Reduktionsgrad bestimmt wird, der im nächsten Walzstich angewandt wird.

9. Verfahren nach einem der vorherigen Ansprüche, **dadurch gekennzeichnet, daß** ein Dickensprung an der Verbindung zweier Kathodenbleche durch abtragende oder stauchende Materialbearbeitung vor dem Walzen in einen Keil umgeformt wird.

10. Verfahren nach einem der vorherigen Ansprüche, **dadurch gekennzeichnet, daß** zum Ausgleich von Dickenabweichungen ein Band zumindest im Bereich einer Verbindung von Kathodenblechen gewalzt wird.

11. Verfahren nach einem der vorherigen Ansprüche, **dadurch gekennzeichnet, dass** das Metallband nach Querteilungen als Starter Sheets für die Erzeugung von Kathodenblechen eingesetzt wird.

12. Verfahren nach einem der vorherigen Ansprüche, **dadurch gekennzeichnet, dass** ein Eisenband durch Beimengungen aufgekohlt wird, um Stahl zu erzeugen.

13. Verfahren nach einem der vorherigen Ansprüche, **dadurch gekennzeichnet, daß** zur Vorbehandlung von Kathodenblechen die Kathodenbleche durch eine Wärmebehandlung vor dem Schweißen von Wasserstoff entgast werden.

14. Verfahren nach einem der vorherigen Ansprüche, **dadurch gekennzeichnet, dass** die Kathodenbleche vor dem Schweißen entschwefelt werden und/oder Ihre faserige bzw. kolumnare Kristallstruktur rekristallisiert wird.

## Claims

1. Method for producing metal strips from cathode sheets obtained through aqueous electrolysis of at least one metal, which are connected with intensities of 10³ to 10⁵ W/cm² through fusion welding on their long and/or wide sides, **characterised in that** cathode sheets, which have differences in thickness between each other or within one sheet, are connected in such a way that the plates are arranged in increasing or decreasing order with reference to their thickness or are connected in a sequence, which results in the thickness interval between the thickest and thinnest plate being broken down into subintervals, the plates being allocated to the subintervals according to their thickness and then the plates of a subinterval, which are thinner, being arranged before the plates of a subinterval, which are thicker, according to which a raw strip made in this way is levelled by rolling.

2. Method for producing metal strips from cathode sheets obtained through aqueous electrolysis of at least one metal, which are connected with intensities of 10³ to 10⁵ W/cm² by fusion welding on their long and/or wide sides, **characterised in that** cathode sheets, which have been reduced to the same length and width measurements, are connected in such a way that the plates are arranged in increasing or decreasing order according to their weight or are connected in a sequence, which results in the weight interval between the lightest and the heaviest plate being broken down into subintervals, the plates being allocated to the subintervals according to their weight and then the plates of a subinterval, which are lighter, being arranged before the plates of a subinterval, which are heavier, according to which a raw strip made in this way is levelled by rolling.

3. Method according to one of the previous claims 1 or 2, **characterised in that** rolling is used to reduce differences in thickness in a wedge shaped raw strip from thick to thin with decreasing degree of reduction.

4. Method according to one of the previous claims 1 or 2, **characterised in that** rolling is used to reduce differences in thickness in a wedge shaped raw strip from thin to thick with an increasing degree of reduction, in which rolling starts at the place, where the thickness of the wedge corresponds to the intermediate thickness to be obtained in this stage, and ends, if the end of the strip is reached.

5. Method according to one of the previous claims, **characterised in that** a raw strip is equalised in one or several, particularly reversing, rolling stages with a narrower roll gap each time.

6. Method according to one of the previous claims, **characterised in that** the different grain sizes occurring through connecting the plates and/or adapting the thickness are standardised in the case of metals, which have a phase change, through normalisation and in the case of metals, which have no phase change, through further reduction with subsequent recrystallisation annealing, annealing at an annealing temperature and for an annealing period, which also lead to recrystallisation of at least the deformed sections of the strip, in which the whole strip must have been deformed since the last annealing with a degree of reduction above the critical reshaping degree to such an extent that no coarse grain occurs or through recrystallisation annealing after coarse grain annealing and subsequent deformation.

7. Method according to one of the previous claims, **characterised in that** starting with the relatively or absolutely thickest plates in a raw strip each individual plate is rolled down to at least approximately the thickness of the thickest connection plate, in which this is continued until the whole strip has a uniform thickness to a large extent.

8. Method according to one of the previous claims 3 to 7, **characterised in that** for the next rolling stage, taking into consideration the increase in hardness in the parts of the strip, which have been reduced most, a maximum degree of reduction is determined, which is applied in the next rolling stage.

9. Method according to one of the previous claims, **characterised in that** a thickness gap at the connection between two cathode sheets is reshaped into a wedge by processing involving removing or crushing material before rolling.

10. Method according to one of the previous claims, **characterised in that** to even out differences in thickness a strip is rolled at least in the area of a connection between cathode sheets.

11. Method according to one of the previous claims, **characterised in that** after cross cutting the metal strip is used as starter sheets for producing cathode sheets.

12. Method according to one of the previous claims, **characterised in that** an iron strip is carbonised through admixtures in order to produce steel.

13. Method according to one of the previous claims, **characterised in that** to pretreat cathode sheets hydrogen gas is removed from the cathode sheets by heat treatment before welding.

14. Method according to one of the previous claims, **characterised in that** the cathode sheets are desulphurised before welding and/or their fibrous or columnar crystal structure is recrystallised.

## Revendications

1. Procédé de fabrication de feuillards métalliques en tôles pour cathodes obtenues par électrolyse aqueuse d'au moins un métal, lesquelles sont jointes par soudage par fusion sur leurs longueurs et/ou leurs largeurs avec une intensité comprise entre 10³ et 10⁵ W/cm², **caractérisé en ce que** des tôles pour cathodes qui présentent des variations d'épaisseur entre elles ou à l'intérieur même d'une tôle, sont jointes de telle manière que les plaques sont disposées en série ascendante ou descendante en fonction de leur épaisseur, ou suivant un ordre obtenu **en ce que** l'écart d'épaisseur entre la plaque la plus épaisse et la plaque la plus mince est divisé en écarts partiels et les plaques sont affectées aux écarts partiels suivant leur épaisseur, avant que les plaques d'écart partiel de faible épaisseur soient disposées devant les plaques d'écart partiel de grande épaisseur, l'aplanissement d'un feuillard brut ainsi formé étant réalisé par des rouleaux.

2. Procédé de fabrication de feuillards métalliques en tôles pour cathodes obtenues par électrolysé aqueuse d'au moins un métal, lesquelles sont jointes par soudage par fusion sur leurs longueurs et/ou leurs largeurs avec une intensité comprise entre 10³ et 10⁵ W/cm², **caractérisé en ce que** des tôles pour cathodes qui ont été portées à des dimensions de longueur et de largeur égales entre elles, sont jointes de telle manière que les plaques sont disposées en série ascendante ou descendante en fonction de leur poids ou suivant un ordre obtenu **en ce que** l'écart de poids entre la plaque la plus légère et la plaque la plus lourde est divisé en écarts partiels et les plaques sont affectées aux écarts partiels suivant leur poids, avant que les plaques d'écart partiel de moindre poids soient disposées devant les plaques d'écart partiel de poids élevé, l'aplanissement d'un feuillard brut ainsi formé étant réalisé par des rouleaux.

3. Procédé selon l'une des revendications 1 ou 2, **caractérisé en ce qu'**il est procédé à un laminage avec un degré de réduction décroissant de la partie épaisse vers la partie mince pour le resserrement des variations d'épaisseur dans un feuillard brut de forme trapézoïdale.

4. Procédé selon l'une des revendications 1 ou 2, **caractérisé en ce qu'**il est procédé à un laminage avec un degré de réduction croissant de la partie mince vers la partie épaisse pour le resserrement des variations d'épaisseur dans un feuillard brut de forme trapézoïdale, le laminage étant commencé à l'emplacement où l'épaisseur de section trapézoïdale correspond à l'épaisseur intermédiaire à obtenir dans cette passe, et arrêté quand l'extrémité de feuillard est atteinte.

5. Procédé selon l'une des revendications précédentes, **caractérisé en ce qu'**un feuillard brut est égalisé en une ou plusieurs phases de laminage, en particulier inversées, avec un entrefer plus étroit.

6. Procédé selon l'une des revendications précédentes, **caractérisé en ce que** les différentes grosseurs de cristaux obtenues par la jonction des tôles et/ou par égalisation d'épaisseur sont homogénéisées dans le cas de métaux présentant une transformation de phase, et cela par recuit de normalisation, et dans le cas de métaux ne présentant aucune transformation de phase par nouvelle réduction avec recuit de recristallisation consécutif, recuit à température et durée de recuit menant aussi à une recristallisation des tronçons de feuillard le moins déformés, tout le feuillard devant être déformé depuis le dernier recuit avec un tel degré de réduction supérieur au degré de déformation critique, qu'aucun grain gros n'apparaisse, ou par recuit de recristallisation après recuit à grain gros et déformation consécutive.

7. Procédé selon l'une des revendications précédentes, **caractérisé en ce que,** commençant par les plaques les plus épaisses, de manière relative ou absolue, dans un feuillard brut, chaque plaque est individuellement réduite, en particulier par laminage inversé, au moins approximativement à l'épaisseur de la plaque de raccord la plus épaisse, ceci étant poursuivi jusqu'à ce que tout le feuillard présente une épaisseur au moins largement homogène.

8. Procédé selon l'une des revendications 3 à 7, **caractérisé en ce que,** pour la passe suivante, un degré de réduction maximum est déterminé en tenant compte de l'accroissement de dureté dans les parties de feuillard les plus fortement réduites, lequel sera appliqué pendant la passe suivante.

9. Procédé selon l'une des revendications précédentes, **caractérisé en ce qu'**un saut d'épaisseur est transformé en section trapézoïdale à la jonction de deux tôles pour cathodes, par usinage avec enlèvement ou refoulement de matériau avant le laminage.

10. Procédé selon l'une des revendications précédentes, **caractérisé en ce que,** pour l'égalisation de variations d'épaisseur, un feuillard est laminé au moins dans la zone d'une jonction de tôles pour cathodes.

11. Procédé selon l'une des revendications précédentes, **caractérisé en ce que** le feuillard métallique est utilisé après division transversale sous forme de feuillards initiaux pour la production de tôles pour cathodes.

12. Procédé selon l'une des revendications précédentes, **caractérisé en ce qu'**un feuillard de fer est cémenté par ajouts pour produire de l'acier.

13. Procédé selon l'une des revendications précédentes, **caractérisé en ce que,** pour le prétraitement de tôles pour cathodes, les tôles pour cathodes sont soumises à une purge d'hydrogène par traitement thermique avant soudage.

14. Procédé selon l'une des revendications précédentes, **caractérisé en ce que** les tôles pour cathodes sont soumises à une désulfuration et/ou **en ce que** leur structure cristalline fibreuse ou colonnaire est recristallisée avant soudage.
